(19) Europäisches Patentamt
European Patent Office
Office européen des brevets

(11) **EP 2 553 127 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(21) Anmeldenummer: **11711868.7**

(22) Anmeldetag: **29.03.2011**

(51) Int Cl.:
*C21C 5/46* (2006.01)    *F27B 3/22* (2006.01)
*F27D 3/16* (2006.01)

(86) Internationale Anmeldenummer:
**PCT/EP2011/054842**

(87) Internationale Veröffentlichungsnummer:
**WO 2011/120976 (06.10.2011 Gazette 2011/40)**

(54) **ÜBERSCHALLDÜSE ZUM EINSATZ IN METALLURGISCHEN ANLAGEN SOWIE VERFAHREN ZUR DIMENSIONIERUNG EINER ÜBERSCHALLDÜSE**

ULTRASONIC NOZZLE FOR USE IN METALLURGICAL INSTALLATIONS AND METHOD FOR DIMENSIONING AN ULTRASONIC NOZZLE

BUSE ULTRASONORE À UTILISER DANS DES INSTALLATIONS MÉTALLURGIQUES ET PROCÉDÉ DE DIMENSIONNEMENT D'UNE BUSE ULTRASONORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2011 DE 102011002616**
**12.08.2010 DE 102010034210**
**31.03.2010 DE 102010013770**

(43) Veröffentlichungstag der Anmeldung:
**06.02.2013 Patentblatt 2013/06**

(73) Patentinhaber: **SMS Siemag AG**
**40237 Düsseldorf (DE)**

(72) Erfinder:
• **ODENTHAL, Hans-Jürgen**
**40822 Mettmann (DE)**
• **SCHLÜTER, Jochen**
**44265 Dortmund (DE)**
• **OLIVIER, Herbert**
**52072 Aachen (DE)**
• **KLIOUTCHNIKOV, Igor**
**52062 Aachen (DE)**

(74) Vertreter: **Klüppel, Walter et al**
**Hemmerich & Kollegen**
**Patentanwälte**
**Hammerstraße 2**
**57072 Siegen (DE)**

(56) Entgegenhaltungen:
**WO-A1-2008/002585**

• **McCabe: "Design of a Supersonic Nozzle", Aerade , 1967, XP055000982, London Gefunden im Internet: URL:http:// aerade.cranfield.ac.uk/ara/arc/ rm/3440.pdf [gefunden am 2011-06-20]**
• **CHATTERJEE A: "ON SOME ASPECTS OF SUPERSONIC JETS OF INTEREST IN LD STEELMAKING", IRON AND STEEL, IPC SCIENCE AND TECHNOLOGY PRESS LTD. GUILDFORD, GB, 1. Dezember 1972 (1972-12-01), Seiten 627-634, XP002001364,**

**Beschreibung**

Technisches Gebiet

Die vorliegende Erfindung bezieht sich auf eine Überschalldüse zum Einsatz in metallurgischen Anlagen sowie auf ein Verfahren zur Dimensionierung einer solchen Überschalldüse.

Stand der Technik

Überschalldüsen, oder auch Laval-Überschalldüsen, finden im Bereich metallurgischer Anwendungen einen weiten Einsatzbereich. Beispielsweise wird bei der Stahlerzeugung in einem BOF-Konverter (Basic Oxygen Furnace) Sauerstoff mit Hilfe einer Blaslanze auf das Metallbad aufgeblasen.

Auch im Bereich von Elektrolichtbogenöfen (EAF - Electric Arc Furnace) werden Überschalldüsen bei Injektoren zum Einblasen von Sauerstoff oder bei Brennern zum Aufschmelzen von Schrott verwendet.

Beispielsweise aus der WO00/28096 A1 ist eine Überschalldüse für eine Vorrichtung zum Einspritzen von Sauerstoff und anderen technischen Gasen bekannt, welche in metallurgischen Prozessen, insbesondere beim Schmelzen von Metallen, verwendet werden kann. Es wird hier ein mathematisches Verfahren zur Auslegung der Wandkontur des konvergenten und des divergenten Düsenteils von Laval-Überschalldüsen beschrieben, wobei ein inverses Verfahren auf Basis der hyperbolischen Gasgleichungen verwendet wird.

Allgemein beschrieben sind herkömmliche Laval-Überschalldüsen beispielsweise in der DE 101 26 100 A1, welche ein Verfahren und eine Vorrichtung zum Kaltgasspritzen beschreibt.

In dem Fachartikel "Design of a Supersonic Nozzle", McCabe, London, 1. Januar 1967, XP55000982 wird die Dimensionierung einer Düse für die Raumfahrt beschrieben.

Aus der WO00/28097 A1 ist weiterhin eine integrierte Vorrichtung zum Injizieren technischer Gase und eines puderförmigen Materials zum Bearbeiten von Metallbädern bekannt. Weiterhin beschreibt die EP 1 506 816 A1 eine Laval-Überschalldüse für thermisches oder kinetisches Spritzen.

Bisherige Überschalldüsen für metallurgische Systeme sind bezüglich auftretender Verdichtungsstöße oder Expansionswellen innerhalb der Überschalldüse nicht strömungs- und verschleißoptimiert. So beträgt beispielsweise die Standzeit heutiger Blaslanzen ca. 150 - 250 Konverterschmelzen. Nach dieser Zeit sind die Düsenkanten so weit verschlissen, dass die Gefahr eines Wasserdurchbruchs der wassergekühlten Überschalldüse besteht und die Lanzenköpfe ausgetauscht werden müssen.

Beschreibung

Entsprechend ist es eine Aufgabe der vorliegenden Erfindung, eine Überschalldüse zum Einsatz in metallurgischen Anlagen sowie ein Verfahren zur Bestimmung der Parameter anzugeben, mittels welchem der Verschleiß der Überschalldüsen reduziert werden kann.

Diese Aufgabe wird mittels einer Überschalldüse gemäß den Ansprüchen mit den nachfolgend angegebenen Merkmalen gelöst.

Entsprechend ist eine Überschalldüse zum Einsatz in metallurgischen Anlagen vorgesehen, insbesondere zum Aufblasen von Sauerstoff in einem Basic Oxygen Furnace (BOF), in einem Argon Oxygen Decarburization (AOD) Konverter (Argon-Sauerstoff-Entkohlung), oder einem Elektrolichtbogenofen (EAF), mit einem konvergenten Abschnitt und einem divergenten Abschnitt, welche an einer Düsenkehle aneinander angrenzen. Die Überschalldüse ist durch folgende Schar von Düsenformen in deren jeweiligem Auslegungsfall definiert:

| Druck $p_0$ in bar | Volumenstrom $\dot{V}_0$ in $Nm^3$/min | Radius im engsten Querschnitt $r^*$ in mm | Austrittsradius $r_e$ in mm | max. Düsentänge 1 in mm |
|---|---|---|---|---|
| 4 | 20 | 12.0 | 14.0 | $50 \pm 20$ |
| 4 | 200 | 39 | 44.0 | $160 \pm 20$ |
| 14 | 20 | 6 | 10.0 | $50 \pm 20$ |
| 14 | 200 | 21 | 33.0 | $160 \pm 20$ |

Die Aufgabe wird weiterhin gelöst durch eine Überschalldüse zum Einsatz in metallurgischen Anlagen, zum Aufblasen von Sauerstoff in einem Basic Oxygen Furnace (BOF), in einem Argon Oxygen Decarburization (AOD) Konverter (Argon-Sauerstoff-Entkohlung), oder einem Elektrolichtbogenofen (EAF), mit einem konvergenten Abschnitt und einem divergenten Abschnitt, welche an einer Düsenkehle (DK) aneinander angrenzen. Die Innenkontur der Überschalldüse entspricht der auf numerischem Wege mit einem modifizierten Charakteristikenverfahren ermittelten Kontur.

Die Innenkontur der Überschalldüse entspricht der ermittelten Kontur, welche durch numerische Lösung der partiellen gasdynamischen Differentialgleichungen ermittelt wird, bei welchen die stationäre, isentrope, rotationssymmetrische Gasströmung mittels räumlich diskretisierter Charakteristikengleichungen unter Berücksichtigung entsprechender Kompatibilitätsbedingungen dargestellt ist. Dieses Verfahren ist in der Literatur auch als "Charakteristikenverfahren" oder "Methode der Charakteristiken" bekannt.

Mit anderen Worten wird numerisch für jede axiale Position (x-Position) entlang der Überschalldüse ein zugehöriger radialer Wert (r-Position) so ermittelt, dass sich innerhalb der Überschalldüse eine störungsfreie Gasströmung ausbildet. Das heißt, dass sich die Wandkontur im Expansionsteil der Überschalldüse nicht durch eine eindeutige mathematische Funktion festlegen lässt.

Mittels der entsprechend bestimmten Überschalldüsen kann, wenn die Überschalldüsen im Auslegungszustand betrieben werden, erreicht werden, dass der Sauerstoffstrahl innerhalb und außerhalb der Überschalldüse keine, oder nur sehr geringe Druckstörungen, zeigt. Entsprechend liegt der expandierende Gasstrahl auch eng an der Düsenkontur an und kühlt damit die Düsenwand. Weiterhin wird aufgrund dieses Verhaltens eine unerwünschte Strömungsablösung im Bereich des Düsenaustritts erschwert, so dass das Verschleißverhalten der Überschalldüse im Auslegungspunkt verbessert wird. Auf diese Weise lässt sich eine Verschleißoptimierung erreichen, da die Kühlung der Überschalldüse aufgrund des besseren internen Strömungsverhaltens sowie durch die reduzierte Neigung zur Strömungsablösung im Austrittsbereich verbessert wird.

Weiterhin wird durch die Konturierung der Überschalldüse gemäß der vorliegenden Offenbarung erreicht, dass die Düsenlänge bei verbesserten Strahleigenschaften um rund 20 - 30 % reduziert werden kann, wodurch teures Kupfermaterial eingespart, das Gewicht der Überschalldüse reduziert sowie die Einbautiefe reduziert wird. Entsprechend kann die Blaslanze oder der Injektor oder der Brenner kleiner und leichter ausgeführt werden, was den Einbau beziehungsweise die Handhabung dessen vereinfacht.

Darüber hinaus haben CFD-Simulationen (CFD - Computational Fluid Dynamics) belegt, dass sich die Strahlgeschwindigkeit entlang der Strahlachse für die Überschalldüse gemäß der vorliegenden Offenbarung um ca. 3 - 5 % erhöht. Damit erhöht sich aber auch die Länge des nutzbaren Überschallbereiches des Strahls. Es ergibt sich, dass die entsprechend der vorliegenden Offenbarung gestaltete Überschalldüse nicht nur bezüglich des Verschleißverhaltens, sondern auch bezüglich des Materialverbrauchs, der Einbaueigenschaften, der Handhabung sowie der Wirkung gegenüber konventionellen Überschalldüsen verbessert wurde.

Die Überschalldüsen gemäß der vorliegenden Offenbarung können beispielsweise für Injektoren, Brenner, Blaslanzen etc. zum definierten Einsatz in metallurgischen Anlagen (Elektrolichtbogenofen, Reduktionsofen, Konverter, Stahlgießpfanne, etc.) verwendet werden.

Das Verhältnis der Düsenlänge l zum Radius im engsten Querschnitt r*, also das Verhältnis l/r*, liegt zwischen 2,1 und 11,6, bevorzugt zwischen 2,1 und 8,3, noch bevorzugter zwischen 2,1 und 5,4, noch bevorzugter zwischen 2,1 und 5,0, und weist insbesondere Werte von 11,6; 8,3; 5,4; 5,0; 4,8; 4,2; 4,1; 3,6; 3,3; 3,1 oder 2,1 auf. Der engste Querschnitt liegt bei den vorliegenden Überschalldüsen in der Düsenkehle. Durch die entsprechende Düsengeometrie können gegenüber konventionellen Düsen verkürzte Überschalldüsen hergestellt werden.

In einer weiteren bevorzugten Ausbildung weist der konvergente Abschnitt der Überschalldüse eine glockenförmige Kontur auf und der divergente Abschnitt weist eine glockenförmige Kontur auf, wobei die glockenförmigen Konturen des konvergenten Abschnittes und des divergenten Abschnittes an der Düsenkehle stetig ineinander übergehen. Durch die glockenförmige Kontur ist gewährleistet, dass die Düse störungsfrei und verschleißarm verwendet werden kann, der Strahlimpuls am Düsenaustritt maximal ist und eine lange Überschalllänge des Gasstrahls realisiert wird.

Kurze Beschreibung der Zeichnungen

Nachfolgend wird die vorliegende Offenbarung auf Grundlage der beigefügten Figuren noch einmal ausführlich erläutert. In den Figuren zeigen:

Figur 1    zeigt die prinzipielle Mach-Zahlverteilung innerhalb und außerhalb einer Laval-Überschalldüse, welche mit Sauerstoff betrieben wird;

Figur 2    zeigt rotationssymmetrische, halbe Geometrien einer Laval-Überschalldüse für eine konventionelle Laval-Überschalldüse (A) sowie für eine Laval-Überschalldüse gemäß der vorliegenden Offenbarung (B);

Figur 3    zeigt das Ergebnis einer CFD-Simulation, für eine herkömmliche Laval-Überschalldüse (A) sowie eine Laval-Überschalldüse gemäß der vorliegenden Offenbarung (B);

Figur 4    zeigt unterschiedliche Darstellungen einer Laval-Überschalldüse gemäß der vorliegenden Offenbarung (Bereiche, Radien, Charakteristiken);

Figur 5    zeigt unterschiedliche Berechnungen der Geometrie einer Laval-Überschalldüse gemäß der vorliegenden Offenbarung;

Figur 6    zeigt eine Tabelle, aus welcher sich die Geometrien zweier Laval-Überschalldüsen gemäß der vorliegenden Offenbarung unmittelbar ergeben.

Detaillierte Beschreibung der Zeichnungen

Nachfolgend werden unterschiedliche Ausführungsformen der vorliegenden Offenbarung beschrieben, wobei gleiche Bezugszeichen für gleiche oder ähnliche Komponenten verwendet werden und teilweise auf die wiederholte Beschreibung verzichtet wird.

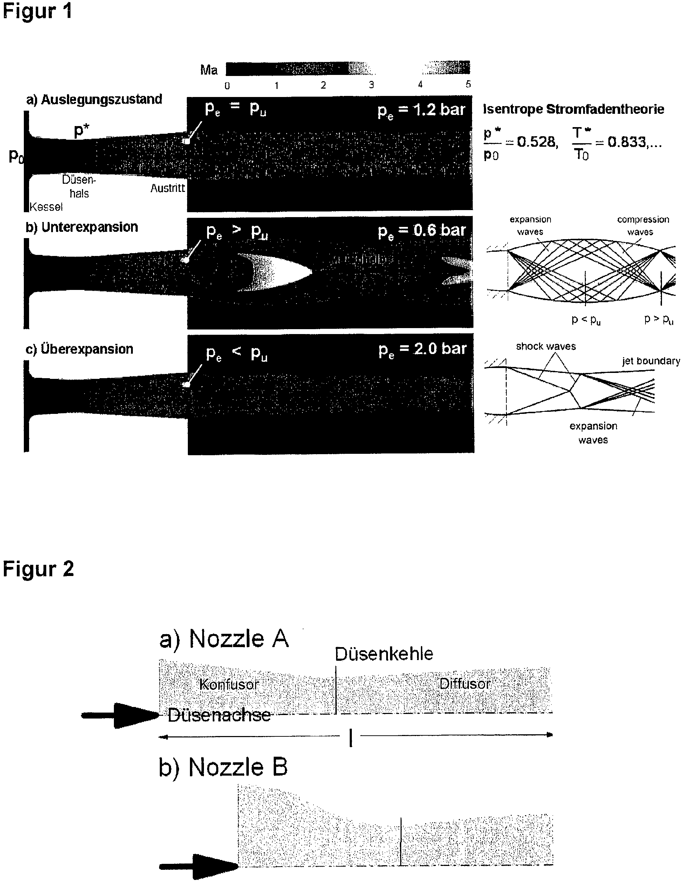

Figur 1 zeigt eine prinzipielle Mach-Zahlverteilung innerhalb und außerhalb einer Laval-Überschalldüse, welche mit Sauerstoff betrieben wird. Der Sauerstoff tritt dabei in eine Atmosphäre mit 1650°C ein.

Deutlich wird dabei, dass im Auslegungszustand, der in Figur 1 a gezeigt ist, nämlich wenn der Druck am Austrittsquerschnitt $p_e$ gleich dem Umgebungsdruck $p_u$ ist, eine im Wesentlichen störungsfreie Strömung erreicht wird.

In Figur 1b ist eine Unterexpansion gezeigt, bei welcher der Umgebungsdruck $p_u$ kleiner ist als der Druck an dem Austrittsquerschnitt $p_e$. Hier ist deutlich zu erkennen, dass ein gestörter Strahlverlauf vorliegt.

In Figur 1c ist eine Überexpansion gezeigt, nämlich bei welcher der Umgebungsdruck $p_u$ größer ist als der Austrittsdruck an dem Austrittsquerschnitt $p_e$. Auch hier liegt ein gestörter Strahlverlauf vor.

Es wird bereits in dieser Darstellung unmittelbar klar, dass eine Überschalldüse, die nicht in ihrem Auslegungszustand betrieben wird, immer einen gestörten Strahlverlauf aufweist. Nur eine im Auslegungszustand betriebene Überschalldüse kann einen glatten Strahlverlauf zeigen.

In Figur 2A ist eine konventionelle Laval-Überschalldüse A gezeigt, welche einen ebenen konvergenten Einlaufbereich, eine im Wesentlichen gleichbleibende Düsenkehle sowie einen ebenen divergenten Auslaufbereich aufweist. Die Gesamtdüsenlänge ist I = 142 mm.

Figur 2B zeigt die Laval-Überschalldüse gemäß der vorliegenden Offenbarung, welche sowohl im konvergenten Einlaufbereich als auch im divergenten Auslaufbereich glockenförmig gebogene Wände aufweist. Die Düsenlänge ist I = 100 mm.

Unter einer glockenförmig gebogenen Wand wird eine Wand verstanden, bei welcher die Wandkontur von einem konkaven Bereich zu einem konvexen Bereich wechselt und entsprechend einen Wendepunkt aufweist. Dies ist bei der in Figur 2B gezeigten Überschalldüse der Fall, hier ist der Wandverlauf, von links kommend entlang der Flussrichtung zunächst ein konkaver Verlauf, der dann in einen konvexen Verlauf übergeht. Vom Bereich der Düsenkehle DK aus wird zunächst ein konvexer Bereich durchlaufen, welcher in einen konkaven Bereich zum Austrittsquerschnitt AQ hin über den Wendepunkt WP hinweg wieder konkav wird. Entsprechend weist gemäß der Überschalldüse der vorliegenden Offenbarung sowohl der konvergente Bereich als auch der divergente Bereich jeweils eine Glockenform auf. Der glockenförmige konvergente Bereich und der glockenförmige divergente Bereich stoßen in der Düsenkehle DK stetig aufeinander, so dass die Wandkontur an dieser Stelle stetig weitergeführt wird.

Bei der Stahlerzeugung im BOF-Konverter (Basic Oxygen Furnace) wird der Sauerstoff mit Hilfe einer Blaslanze auf das Metallbad aufgeblasen. Im Kopf der Blaslanze befinden sich mehrere, unter einem bestimmten Winkel angeordnete, konvergent-divergenten Überschalldüsen (Lavaldüsen), die den Sauerstoff auf Überschallgeschwindigkeit beschleunigen. Figur 1A zeigt eine solche Überschalldüse. Die Anzahl der Überschalldüsen im Kopf der Blaslanze hängt vom gewünschten Durchfluss ab, typischerweise befinden sich 5 bis 6 Überschalldüsen im Kopf. Der Sauerstoff tritt mit etwa zweifacher Schallgeschwindigkeit und hohem Impuls aus der Überschalldüse aus und trifft - je nach betriebsbedingtem Lanzenabstand über dem Schmelzenbad - nach ca. 1.5 m bis 3.0 m auf die Schmelze. Er erzeugt dort eine oszillierende Blasmulde und sorgt so für eine intensive Entkohlungsreaktion. Der Lanzenkopf der Blaslanze ist aus Kupfer gegossen oder geschmiedet und wird durch Wasser gekühlt, wobei der Zulauf durch einen ringförmigen Kanal im Inneren der Lanze und der Rücklauf durch einen ringförmigen Kanal im Äußeren der Lanze erfolgen.

Durch die Expansion des Sauerstoffes im divergenten Düsenteil der Überschalldüse kühlt sich das Gas bis zum Düsenaustritt bis auf ca. -100°C ab, so dass der Lanzenkopf auch von der Gasseite her gekühlt wird. Solange der Strahl fest an der Düsenwand anliegt, die Kühlwasserzuführung aufrechterhalten wird und keine Verbärung der Lanze vorliegt, ist der Düsenverschleiß gering. Typische Standzeiten von Blaslanzen liegen derzeit bei ca. 150 bis 250 Konverterschmelzen.

Eine ähnliche Anwendung für Überschalldüsen findet man bei Injektoren zum Einblasen von Sauerstoff oder Brennern zum Aufschmelzen von Schrott im Elektrolichtbogenofen (EAF - Electric Arc Furnace). Beim Injektoren/Brenner handelt es sich um ein und dasselbe Aggregat, wobei sich nur die Betriebsweise ändert. Das Aggregat besteht aus einer zentralen Überschalldüse, die von einer Ringspaltdüse umgeben wird.

Im Injektormodus wird reiner Sauerstoff durch die Überschalldüse und heißes Abgas ($CO_2$) durch die Ringspaltdüse geblasen. Durch den ringförmigen, heißen Hüllgasstrahl erhofft man sich, dass der zentrale Sauerstoffstrahl über eine größere Länge stabil bleibt und dadurch große Überschalllängen erzielt werden. Auch im Brennermodus wird Sauerstoff über die zentrale Überschalldüse transportiert, jedoch wird zusätzlich über den Ringspalt Erdgas ($CH_4$) gefördert, so dass es zu einer stöchiometrischen Verbrenung mit langer Flammenbildung außerhalb der Düse kommt.

Im Injektormodus, also beim Aufblasen von Sauerstoff über die zentrale Überschalldüse auf die Schmelzenoberfläche, ist es das primäre Ziel, die Schmelze möglichst rasch zu entkohlen, gleichzeitig aber auch eine effektive Schaumschlacke im EAF zu erzeugen, um die umgebende Ofengeometrie (Kühlpanels) vor der extrem heißen Lichtbogenstrahlung abzuschirmen. Da der Sauerstoffinjektor in einem vorgelagerten Ofenpanel eingebaut, und unter einem bestimmten Winkel von ca. 40° angeordnet ist, muss der Sauerstoffstrahl unter Umständen lange Wegstrecken von bis zu 3 m überbrücken, um zur Schmeizenoberfläche zu gelangen. Daher ist es wichtig, einen möglichst langen, kohärenten Überschallstrahl zu generieren und mit einem hohen Strahlimpuls auf die Schmelzenoberfläche zu treffen. Nur in diesem Fall ist eine gute Entkohlung bei gleichzeitig intensiver Vermischung der Schmelze möglich. Damit die Überschalllänge möglichst lang ist, darf der Gasstrahl keinerlei Störungen, weder innerhalb noch außerhalb der Überschalldüse, aufweisen, was bei einer unzureichend ausgelegten Düsenwandkontur aber der Fall ist. Gleichzeitig muss die Standzeit der Überschalldüse hoch sein.

Der Düsenverschleiß ist grundsätzlich von zwei Faktoren abhängig:

a) Vordruck / Volumenstrom

Jede Überschalldüse kann nur für einen Betriebspunkt bezüglich des Vordruckes $p_0$, des Volumenstromes Vo und des Umgebungsdruckes $p_u$ im metallurgischen Aggregat ausgelegt werden. Diese Größen werden im Betrieb ständig geregelt, so dass die reale Düsenströmung für eine mehr oder weniger lange Zeitdauer vom idealen Auslegungszustand abweicht. Als Folge dessen bilden sich inner- und außerhalb der Überschalldüse komplexe Störungsmuster (diamond pattern) in Form von Expansionswellen und Verdichtungsstößen, die zum Verschleiß der Düsenkante führen. Dies ist beispielhaft auch in den auf der rechten Seite der Figur 1 gezeigten Zeichnungen abgebildet.

Insbesondere ist die Verringerung des Vordruckes $p_0$ unter den Auslegungsdruck kritisch, da schräge Verdichtungsstöße an der Düsenkante zur Ablösung des kalten Sauerstoffstrahls von der Düsenwand führen und ein Rezirkulationsgebiet gebildet wird, über welches das heißes Konvertergas an die Kupferwand gelangt. Genau an dieser Stelle setzt dann - trotz intakter Wasserkühlung - der Düsenverschleiß ein. Hat dieser lokale Verschleiß im divergenten Düsenteil erst einmal begonnen, so wird diese Stelle im weiteren Konverterbetrieb immer stärker durch heißes Konvertergas beaufschlagt. Das Kupfer verschleißt aufgrund des sich ständig vergrößernden Rezirkulationsgebietes mehr und mehr und die Gefahr eines Wasserdurchbruchs steigt.

Figur 1 zeigt dabei den grundsätzlichen Einfluss des Umgebungsdruckes $p_u$ auf die Machzahl-Verteilung. Man bezeichnet die Überschalldüse als nicht angepasst, wenn der Druck $p_e$ im Austrittsquerschnitt ungleich dem Umgebungsdruck $p_u$ ist, wobei der Umgebungsdruck $p_u$ beispielsweise der statische Druck im Konverter oder im Elektrolichtbogenofen ist. Im Gegensatz zum Unterschallstrahl, der stets bei Gleichdruck an der Düsenmündung austritt, weil der Mündungsdruck einen regulierenden Einfluss auf die Strömung ausübt, kann der Überschallstrahl nicht nur gegen Gleichdruck und gegen beliebig starken Unterdruck, sondern auch bis zu einem gewissen Grad gegen Überdruck ausströmen.

Ist $p_e > p_u$, siehe Unterexpansion in Figur 1b, erfordert dies eine Nachexpansion hinter dem Austrittsquerschnitt. An der Düsenaustrittskante setzen Expansionsfächer an und der Strahl erweitert sich außerhalb der Überschalldüse. Die sich kreuzenden Wellen des Expansionsfächers werden an der Freistrahlgrenze als Kompressionswellen reflektiert. Im Strahlkern ist der Druck stromab der Expansionswellen kleiner als der Umgebungsdruck, stromab der Kompressionswellen größer als der Umgebungsdruck. Das periodische Wechselspiel von Expansion und Kompression setzt sich so lange fort, bis Unterschallgeschwindigkeit erreicht wird.

Ist $p_e < p_u$, siehe Überexpansion in Figur 1c, geht von den Austrittskanten der Überschalldüse ein System aus schrägen Verdichtungsstößen aus. Ein Verdichtungsstoß ist mit einer unstetigen Änderung der Größen p, T, p, s, Ma und u verbunden; während p, T, p und s zunehmen, sinken Ma und u ab. Hinter dem senkrechten Verdichtungsstoß herrscht immer Unterschallgeschwindigkeit. Der Freistrahl wird eingeschnürt und der Druck im Strahlzentrum steigt stromabwärts auf Werte über dem Gegendruck an. Die Verdichtungswellen werden am Freistrahlrand des Gasstrahls als Expansionswellen reflektiert und der statische Druck im Strahl sinkt. Dieser Vorgang wiederholt sich periodisch, bis die wachsenden Mischungszonen am Strahlrand das Strömungsfeld beherrschen und der Überschallstrahl in einen Unterschallstrahl überführt wird.

Ob nun $p_u$ oder $p_0$ variiert wird ist unerheblich, da in jedem Fall die aufeinander abgestimmten Werte $p^*/p_0$ und $A^*/A_e$ des Auslegungszustandes verändert werden.

b) Düsengeometrie

Einen ähnlichen Einfluss auf die Ausbildung von Störungen im Sauerstoffstrahl hat die Düsengeometrie. Überschalldüsen für Blaslanzen oder für die Brenner-/Injektortechnologie werden bisher fast immer mit rotationssymmetrischen, ebenen, d. h. kegelförmigen Wänden im konvergenten Teil und divergenten Teil gefertigt, siehe Figur 2, Überschalldüse A. Im mittleren Teil, der so genannten Düsenkehle, befindet sich in der Regel ein ca. 20 mm langer Bereich mit konstantem Durchmesser. Diese fertigungstechnisch festgelegte Form wird von den Herstellern mit Hilfe der isentropen Stromfadentheorie bestimmt, die eine isentrope (reversibvel adiabate), eindimensionale Strömung entlang eines einzelnen Stromfadens in der Überschalldüse voraussetzt. Diese Methode beinhaltet Unzulänglichkeiten, denn grundsätzlich können weder Reibungseinflüsse durch die wandnahe Strömungsgrenzschicht noch dreidimensionale Strömungseffekte innerhalb der Überschalldüse berücksichtigt werden. Durch die dann nicht optimierte Düsengeometrie bilden sich die zuvor beschriebenen Störungen in den physikalischen Größen für den Druck, die Geschwindigkeit, die Temperatur und die Dichte. Wenn diese Störungen an der Düsenwand reflektiert werden, führen sie zur Strömungsablösung mit vorzeitigem Düsenverschleiß und einem ineffizienten Gasstrahl stromab der Überschalldüse.

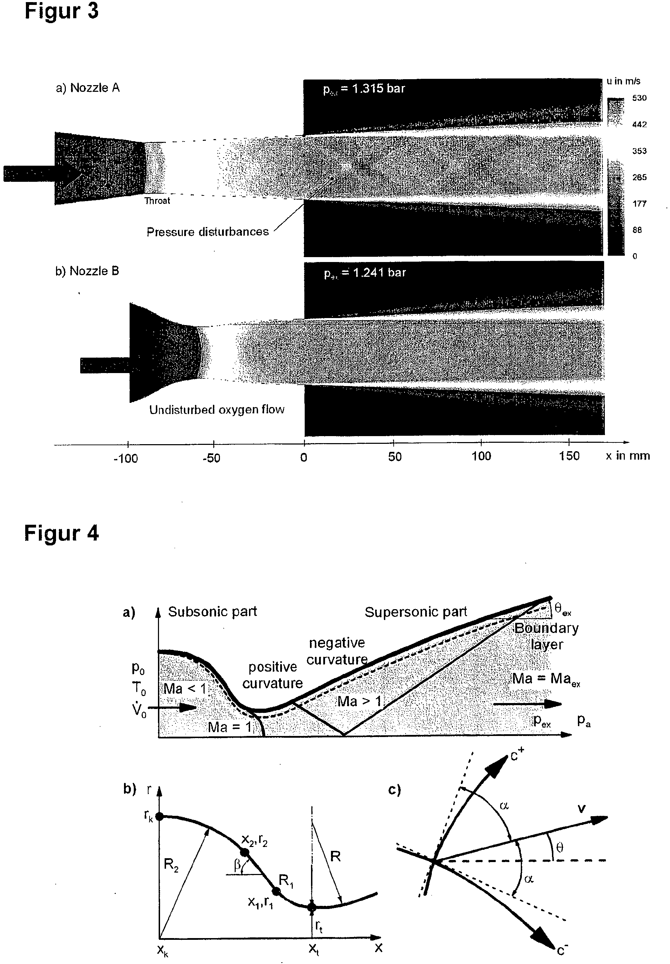

Figur 3, Überschalldüse A zeigt das Ergebnis einer CFD-Simulation (CFD - Computational Fluid Dynamics) für eine mit der konventionellen isentropen Stromfadentheorie ausgelegten Lavaldüse, wie sie typischerweise für die Sauerstoffinjektion im EAF eingesetzt wird und die exakt im Auslegungspunkt arbeitet (Design Point: Sauerstoff, Eintrittsdruck $p_0$ = 8.4 bar, Eintrittsvolumenstrom $\dot{V}_0$ = 51.13 Nm$^3$/min, Umgebungsdruck $p_u$ = 1.23 bar).

Trotz des korrekten, exakt an das Flächenverhältnis A*/A$_e$ angepassten Vordruckes $p_0$ am Düseneintritt bilden sich leichte Druckstörungen (pressure disturbances) innerhalb und außerhalb der Überschalldüse welche die Strahleffizienz verschlechtern. Wenn diese Überschalldüse darüber hinaus noch außerhalb des Auslegungspunktes (Off-Design Point) betrieben wird, werden die Druckstörungen noch stärker. Mancher Hersteller versucht, die Düsenkontur durch eine frei gewählte Spline-Funktion, eine hyperbolische Funktion oder durch eine Aneinanderreihung verschiedener Kreisbögen zu approximieren. Durch CFD-Simulationen wird jedoch erkannt, dass auch in diesen Fällen Druckstörungen innerhalb der Überschalldüse auftreten.

Gemäß der vorliegenden Offenbarung besteht die Aufgabe darin, die optimale, glockenförmige, rotationssymmetrische Form der Lavaldüse auf der Basis eines rein numerischen Verfahrens, das auf einem modifizierten Charakteristikenverfahren aufbaut, zu ermitteln. Diese Methode berücksichtigt den Reibungseinfluss in der Strömungsgrenzschicht und damit die Verdrängungswirkung der Strömungsgrenzschicht auf die Kernströmung. Mehrdimensionale Strömungseffekte werden also berücksichtigt. Durch die glockenförmige Kontur ist gewährleistet, dass die Überschalldüse störungsfrei und verschleißarm arbeitet, der Strahlimpuls am Düsenaustritt maximal ist und eine sehr lange Überschalllänge des Gasstrahls realisiert wird. Ein weiterer, wesentlicher Vorteil ist, dass die Düsenlänge bei verbesserter Effizienz noch um ca. 20 - 30 % reduziert werden und Kupfermaterial gespart werden kann. Das Gewicht der Blaslanze beziehungsweise des Injektors wird deutlich reduziert, was den Einbau des Aggregates vereinfacht.

Zu diesem Zweck wird die ideale Wandkontur der Überschalldüse für das jeweilige metallurgische Aggregat mit einem speziellen, modifizierten Charakteristikenverfahren auf rein numerischem Wege ermittelt. Die Charakteristikenmethode ist ein Verfahren zur Lösung der partiellen, gasdynamischen Differentialgleichungen. Dabei werden die Mach'schen Linien, d.h. die Linien schwacher Druckstörungen, die sich mit Schallgeschwindigkeit fortpflanzen und die unter einem definierten Winkel zum lokalen Geschwindigkeitsvektor angeordnet sind, als Grundlage für die so genannten rechts- und linkslaufenden Charakteristiken angesetzt. Entlang dieser Charakteristiken ist die Lösung der partiellen Differentialgleichungen bekannt. Das Charakteristikenverfahren wird im vorliegenden Fall mit einer Grenzschichtkorrektur gekoppelt, wodurch der impulsvermindernde Einfluss der Strömungsgrenzschicht in der Lavaldüse berücksichtigt wird. Mit Hilfe dieses rein numerischen Verfahrens wird eine Klasse von Düsenkonturen entworfen die zum Einsatz in metallurgischen Anlagen gut geeignet sind.

Die typische Kontur einer Überschalldüse ist in Figur 4a dargestellt. Sie besteht aus einem konvergenten Unterschallteil (subsonic part) und einem divergenten Überschallteil (supersonic part). Häufig bezeichnet man den Überschallteil auch als Expansionsteil.

In Figur 4a ist die sich ausbildende Strömungsgrenzschicht (boundary layer) dargestellt. Innerhalb der Grenzschicht wird das Gas von der maximalen Geschwindigkeit am Grenzschichtrand bis auf die Geschwindigkeit Null an der Wand abgebremst. Direkt an der Wand gilt die so genannte Haftbedingung (no-slip-condition). Die einzelnen Bereich der Düsenströmung (Ma < 1, Ma = 1, Ma > 1) sind in der Figur eingezeichnet.

Der mathematische Weg des gesamten Verfahrens ist komplex und wird daher hier nur ansatzweise beschrieben. Die Lösung basiert u.a. auf folgenden Gleichungen:

a) Grundgleichung der stationären, isentropen, rotationssymmetrischen Gasströmung.

$$(a^2 - u^2)\frac{\partial u}{\partial x} - 2uv\frac{\partial v}{\partial x} + (a^2 - v^2)\left(\frac{\partial v}{\partial r}\right) + \frac{a^2 v}{r} = 0$$

u,v: Strömungsgeschwindigkeit in Axial- und Radialrichtung
x,r: Axial- und Radialkoordinate
a: Schallgeschwindigkeit

b) Numerische Lösung der Charakteristikengleichungen und der Kompatibilitätsbedingungen entlang der Charakteristiken.
Charakteristikengleichungen:

$$\left(\frac{dr}{dx}\right)_{c-} = \tan(\theta - \alpha)$$

und

$$\left(\frac{dr}{dx}\right)_{c+} = \tan(\theta + \alpha)$$

c-, c+: rechtslaufende und linkslaufende Charakteristiken
θ: Winkel zwischen dem lokalen Geschwindigkeitsvektor und dem Koordinatensystem; Strömungswinkel
α: Mach'scher Winkel

Kompatibilitätsbedingungen entlang der Charakteristiken:

$$d(\theta + v)_{c-} = \frac{1}{\sqrt{Ma^2 - 1} - \cot\theta}\frac{dr}{r}$$

und

$$d(\theta - v)_{c+} = -\frac{1}{\sqrt{Ma^2 - 1} + \cot\theta}\frac{dr}{r}$$

Ma: Machzahl
v: Prandtl-Meyer-Winkel

c) Schalllinie und Initiallinie im Düsenhals werden mit den Störpotentialgleichungen für rotationssymmetrische kompressible Strömungen ermittelt.

$$(\kappa + 1)\varphi'_x\varphi'_{xx} - \varphi'_{rr} - \frac{\varphi'_r}{r} = 0$$

φ': Störpotential

d) Die Störgeschwindigkeiten werden mit der kritischen Schallgeschwindigkeit a* berechnet, d. h. u' = φ'$_x$ und v' = φ'$_r$.

$$u'(x,r) = k\,x + \frac{(\kappa+1)k^2 r^2}{4}$$

und

$$v'(x,r) = \frac{(\kappa+1)k^2 xr}{2} + \frac{(\kappa+1)^2 k^3 r^3}{16}$$

k: Konstante

Die Initialwerte werden von der Initiallinie bis zur Initial-Charakteristik berechnet. Hierbei wird ein spezielles Iterationsverfahren zur Bestimmung der Gitterpunkte und der zugehörigen Strömungsparameter sowie zur Berücksichtigung der Krümmung der Charakteristiken eingesetzt.

e) Der Expansionsteil der Überschalldüse mit *positiver Konturkrümmung* wird von der Initialcharakteristik bis zur letzten Expansionscharakteristik berechnet. Hierbei wird eine spezielle Kontur-Funktion angesetzt der Form:

$$r = a + bx + cx^2$$

und

$$\frac{dr}{dx} = \tan\theta = b + 2cx$$

a,b,c: Konstanten

Letztlich werden die Strömungsgrößen auf der Basis der Charakteristiken und der Kontur-Funktion ermittelt. Die Auslegungs-Machzahl auf der Strahlachse wird dabei kontrolliert.

f) Der Expansionsteil der Überschalldüse mit *negativer Konturkrümmung* wird durch die letzte Expansionscharakteristik und die Mach'sche Linie vom Achsenpunkt festgelegt. Basis sind die so genannten Backward-Charakteristiken c⁻ und die Wandstromlinie.

g) Für gegebene Werte von $r_k$, $R_1$, $R_2$ und $\beta$ wird der Unterschallteil der Überschalldüse durch spezielle Konturfunktionen in Form von Kreisbögen festgelegt, da hier keine Druckstörungen auftreten können, siehe Figur 4b.

$$r = f\,(x_k, r_k, R_2) \qquad \text{für } x \leq x_2$$

$$r = f\,(x_1, x_2, r_1, r_2) \qquad \text{für } x_2 \leq x \leq x_1$$

$$r = f\,(x_t, r_t, R_1, R_2) \qquad \text{für } x_1 \leq x \leq x_t$$

Als Ergebnis der iterativen Rechnung erhält man eine optimierte, glockenförmige Düsenkontur, wie sie beispielsweise in Figur 2 als Überschalldüse B gezeigt ist.

Für den dargestellten Anwendungsfall reduziert sich die Düsenlänge beispielsweise von l = 142 mm auf 100 mm, also um rund 30%. Bei gleichzeitig verbesserter Effizienz des Sauerstoffstrahls ist also eine um rund 30% kürzere und damit auch rund 30% leichtere Überschalldüse realisierbar. Dies vereinfacht den Wechsel eines Düsenkopfes erheblich.

Figur 3A zeigt eine CFD-Simulation (CFD - Computational Fluid Dynamics) für eine konventionelle Überschalldüse mit einem ebenen konvergenten Einlauf, einer gleichbleibenden Düsenkehle und einem ebenen divergenten Auslauf. Die Überschalldüse wird exakt in ihrem Auslegungspunkt (Design Point) betrieben und umfasst die folgenden Strömungsgrößen: Das Gasmedium ist Sauerstoff, der Eintrittsdruck $p_0$ = 8,4 bar, das Eintrittsvolumen $V_0$ = 51,13

Nm$^3$/min, (Nm$^3$ entspricht Normkubikmeter), der Umgebungsdruck $p_u$ = 1,23 bar. In der Simulation ist klar zu erkennen, dass bei der Überschalldüse gemäß Figur 3A Störungen beim Auslauf austreten, welche als Störungswellen durch den austretenden Strahl hindurch laufen.

In Figur 3B ist die Laval-Überschalldüse gemäß der vorliegenden Offenbarung mit ihren numerisch ermittelten, glockenförmigen Wänden ebenfalls durch die CFD-Simulation simuliert worden. Es ist unmittelbar zu erkennen, dass diese Überschalldüse, trotz ihrer deutlich kürzeren Bauart, einen homogenen Strom am Austritt erzeugt, in welchem keinerlei Störungen erkennbar sind.

In Figur 4C sind die Mach'schen Linien gezeigt, welche charakteristische Kurven der gasdynamischen Grundgleichung sind. Die Charakteristiken c$^-$ mit dem Strömungswinkel ($\theta-\alpha$) werden als rechtslaufende Charakteristiken bezeichnet, also rechts von der Stromlinie. Die Charakteristiken c$^+$ mit dem Strömungswinkel ($\theta+\alpha$) werden als linkslaufende Charakteristiken bezeichnet, also links von der Stromlinie. v ist dabei der lokale Geschwindigkeitsvektor.

In Figur 3 zeigt Überschalldüse B entsprechend die mittels CFD simulierte Düsenströmung für den Auslegungsfall. Der gesamte Sauerstoffstrahl in der Überschalldüse ist gegenüber der Überschalldüse A in Figur 3 nun störungsfrei. Mit anderen Worten sind die die Strömungsablösung begünstigenden Druckstörungen, welche bei der Überschalldüse A bei ansonsten gleichen numerischen Randbedingungen noch zu sehen waren, verschwunden und der Strahl tritt ungestört aus der Überschalldüse B aus. Im vorliegenden Fall ist der Austrittswinkel $\theta_{ex}$ des Gases aus der Überschalldüse gleich Null Grad. Mit dem Charakteristikenverfahren können jedoch auch Düsenaustrittswinkel ungleich Null Grad ausgelegt werden.

Figur 4A zeigt eine Überschalldüse mit ihrem Unterschallbereich und ihrem Überschallbereich und einer entsprechenden Grenzschicht.

Figur 4B zeigt den Unterschallbereich der Überschalldüse mit den entsprechenden Radienbezeichnungen, welche in einem klassischen Aufbau der Geometrie resultieren, welche zusammengesetzt ist aus Kreisbogenstücken für den Unterschallbereich. Im Unterschallteil der Düse können keine Druckstörungen entstehen.

Die typischen strömungstechnischen Randbedingungen für den Betrieb von Überschalldüsen in den genannten metallurgischen Anlagen sehen wie folgt aus:

Injektordüse/Brennerdüse für einen Elektrolichtbogenofen (EAF):

Gas: Sauerstoff, Stickstoff, Argon, Erdgas, $CO_2$
Eintrittsdruck in die Überschalldüse:     $p_0$ = 4 - 12 bar
Eintrittsvolumenstrom :                    $\dot{V}_0$ = 20 - 100 Nm$^3$/min

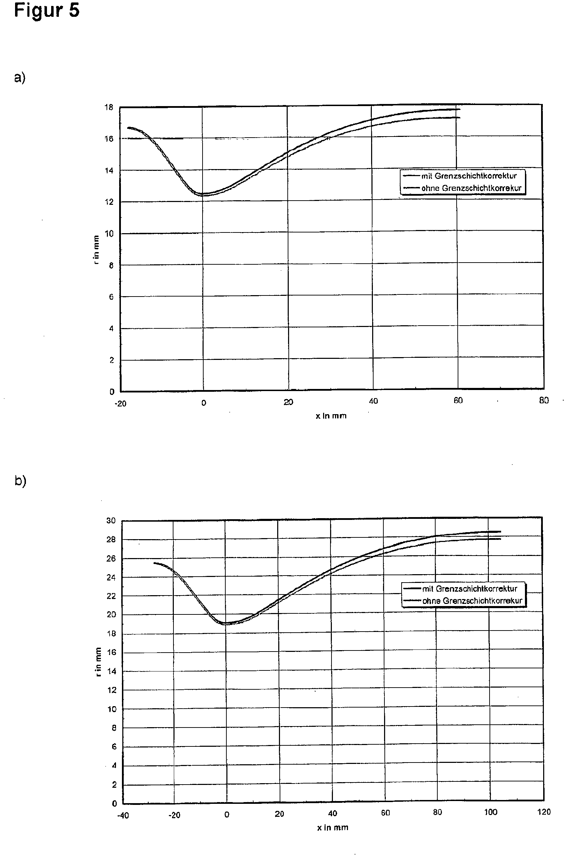

Figur 5a zeigt exemplarisch eine nach dem numerischen Verfahren ausgelegte EAF-Injektor-/Brennerdüse im Sauerstoffbetrieb, berechnet mit dem Eintrittsdruck $p_0$ = 10 bar, dem Eintrittsvolumenstrom $\dot{V}_0$ = 50 Nm$^3$/min und dem Umgebungsdruck $p_u$ = 1.013 bar. Dargestellt ist eine Rechnung mit und eine Rechnung ohne Grenzschichtkorrektur. Bei gleichem Volumenstrom muss die Überschalldüse infolge der Verdrängungswirkung der Grenzschicht etwas größer ausgelegt werden, was der Realität näher kommt als der Fall ohne Grenzschichtkorrektur.

Blaslanzendüse für einen Konverter (AOD, BOF):

Gas: Sauerstoff, Stickstoff
Eintrittsdruck in die Überschalldüse:     $p_0$ = 6 - 14 bar
Eintrittsvolumenstrom :                    $\dot{V}_0$ = 80 - 200 Nm$^3$/min (je Überschalldüse im Lanzenkopf)

Figur 5b zeigt exemplarisch eine nach dem numerischen Verfahren ausgelegte Einzeldüse für eine Blaslanze im Sauerstoffbetrieb, berechnet mit dem Eintrittsdruck $p_0$ = 12 bar, dem Eintrittsvolumenstrom $\dot{V}_0$ = 140 Nm$^3$/min und dem Umgebungsdruck $p_u$ = 1.013 bar. Dargestellt ist wiederum eine Rechnung mit und eine Rechnung ohne Grenzschichtkorrektur.

Aus den zuvor genannten Randbedingungen ergibt sich folgende Klasse von Überschalldüsen (Düsenschar):

Gas: Sauerstoff, Stickstoff, Argon, Erdgas, $CO_2$
Eintrittsdruck in die Überschalldüse:     $p_0$ = 4 - 14 bar

(fortgesetzt)

Eintrittsvolumenstrom : $\dot{V}_0 = 20 - 200\ Nm^3/min$

Daraus ergibt sich folgende Schar an Düsenformen (für $p_u = 1.013\ bar = konst.$):

| Druck $p_0$ in bar | Volumenstrom $\dot{V}_0$ in $Nm^3/min$ | Radius im engsten Querschnitt r* in mm | Austrittsradius $r_e$ in mm | max. Düsenlänge l in mm |
|---|---|---|---|---|
| 4 | 20 | 12.0 | 14.0 | 50 ± 20 |
| 4 | 200 | 39 | 44.0 | 160 ± 20 |
| 14 | 20 | 6 | 10.0 | 50 ± 20 |
| 14 | 200 | 21 | 33.0 | 160 ± 20 |

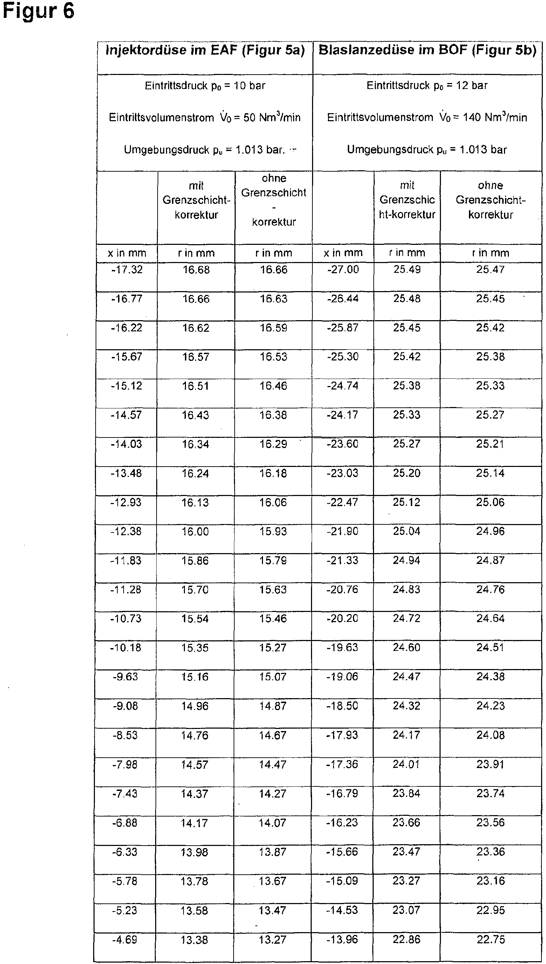

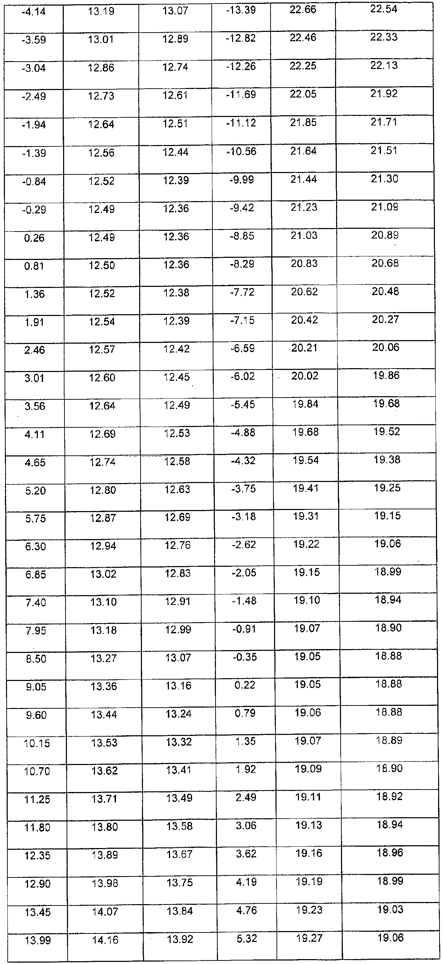

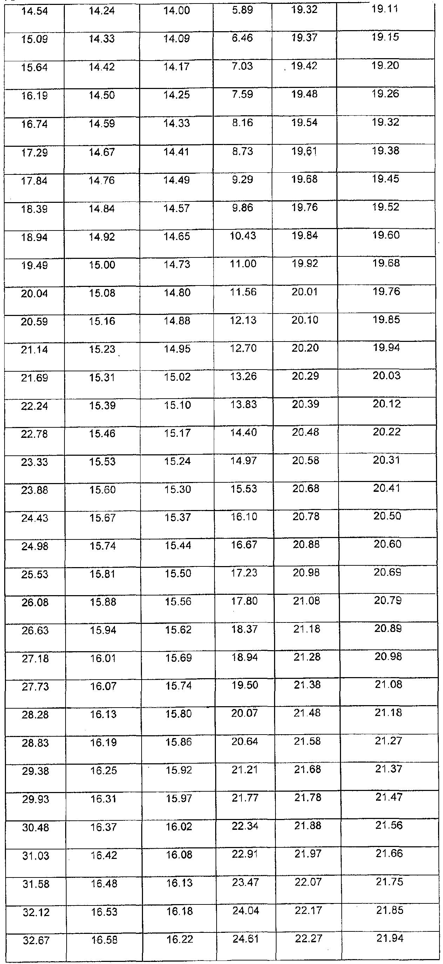

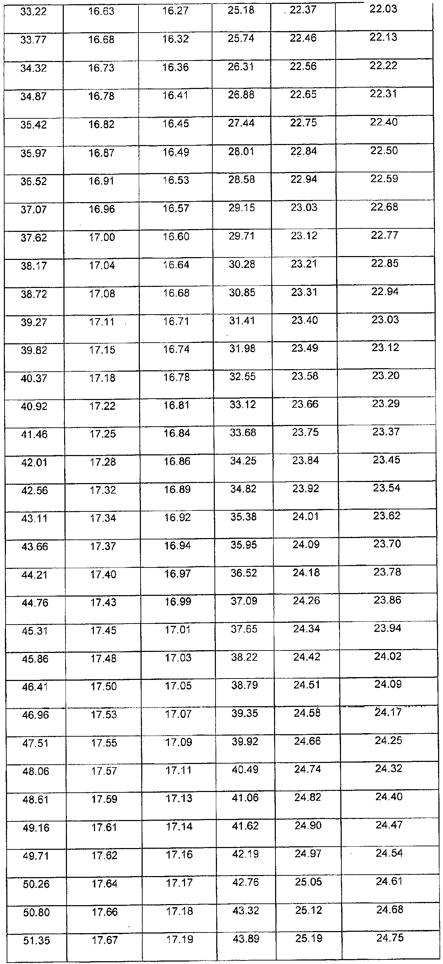

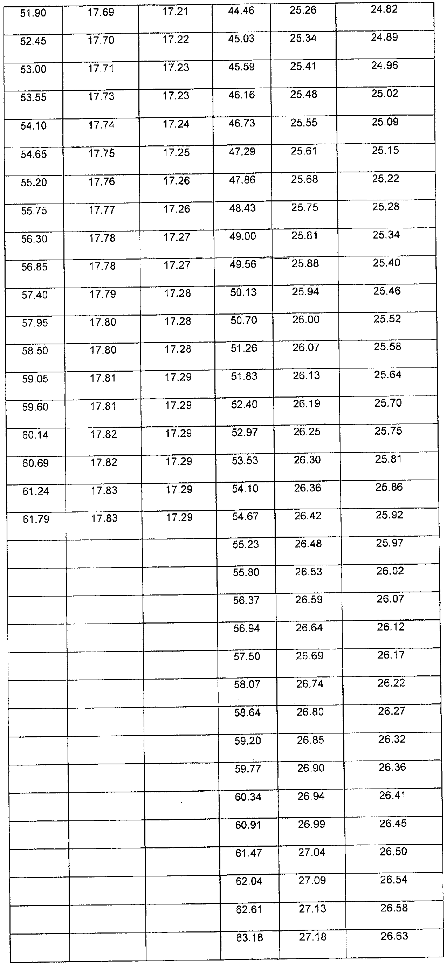

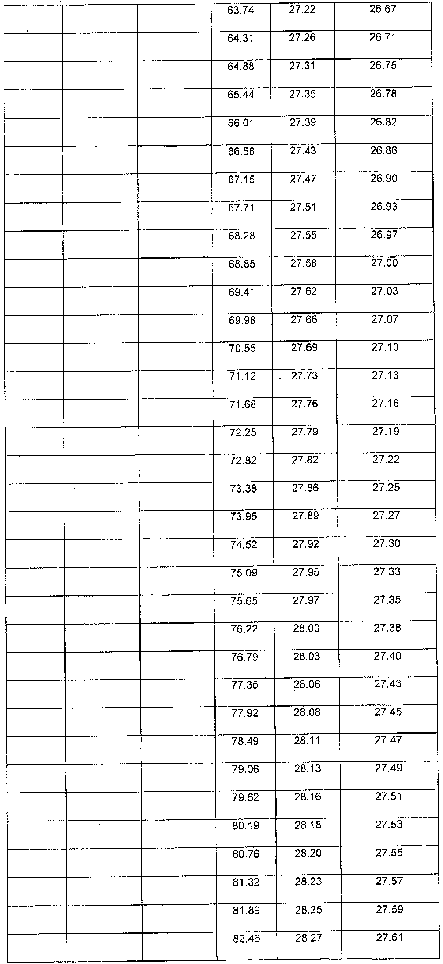

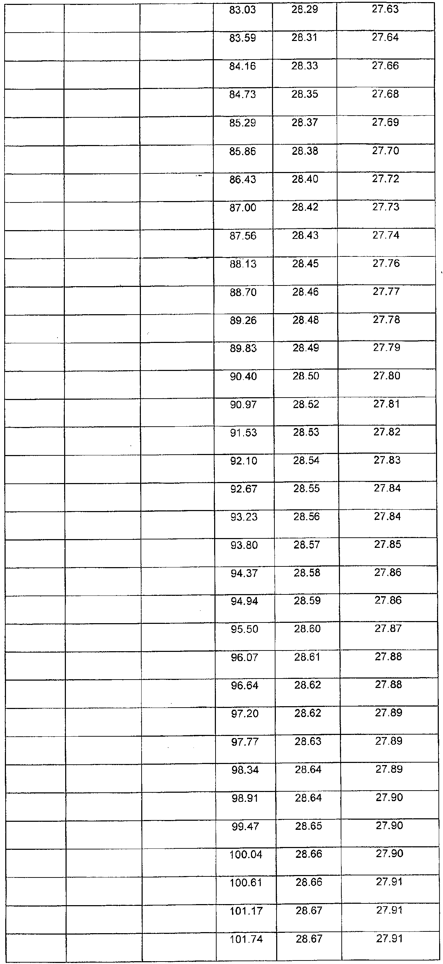

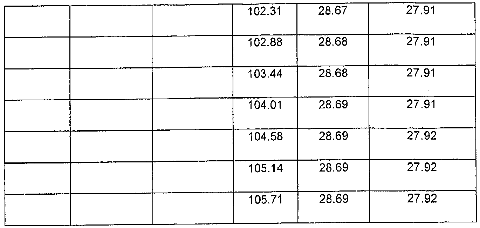

Figur 6 zeigt eine Tabelle für die Axial- und Radial-Koordinaten der beiden Überschalldüsen aus Figur 5.

## Patentansprüche

**1.** Überschalldüse zum Einsatz in metallurgischen Anlagen zum Aufblasen eines Gases in einem Basic Oxygen Furnace (BOF), in einem Argon Oxygen Decarburization (AOD) Konverter, oder einem Elektrolichtbogenofen (EAF), mit einem konvergenten Abschnitt und einem divergenten Abschnitt, welche an einer Düsenkehle (DK) aneinander angrenzen, **dadurch gekennzeichnet, dass** die Innenkontur der Überschalldüse der auf numerischem Wege mit einem modifizierten Charakteristikenverfahren ermittelten Kontur entspricht und die Überschalldüse durch folgende Schar von Düsenformen in deren jeweiligem Auslegungsfall definiert ist:

| Druck $p_0$ in bar | Volumenstrom $\dot{V}_0$ in $Nm^3/min$ | Radius im engsten Querschnitt r* in mm | Austrittsradius $r_e$ in mm | max. Düsenlänge l in mm |
|---|---|---|---|---|
| 4 | 20 | 12.0 | 14.0 | 50 ± 20 |
| 4 | 200 | 39 | 44.0 | 160 ± 20 |
| 14 | 20 | 6 | 10.0 | 50 ± 20 |
| 14 | 200 | 21 | 33.0 | 160 ± 20 |

wobei das Verhältnis der Düsenlänge l zum Radius im engsten Querschnitt r*, also l/r*, zwischen 2,1 und 11,6, bevorzugt zwischen 2,1 und 8,3, noch bevorzugter zwischen 2,1 und 5,4, noch bevorzugter zwischen 2,1 und 5,0 liegt, und insbesondere Werte von 11,6, 8,3, 5,4, 5,0, 4,8, 4,2, 4,1, 3,6, 3,3, 3,1 oder 2,1 aufweist.

**2.** Überschalldüse zum Einsatz in metallurgischen Anlagen zum Aufblasen von Sauerstoff in einem Basic Oxygen Furnace (BOF), in einem Argon Oxygen Decarburization (AOD) Konverter, oder einem Elektrolichtbogenofen (EAF), mit einem konvergenten Abschnitt und einem divergenten Abschnitt, welche an einer Düsenkehle (DK) aneinander angrenzen, **dadurch gekennzeichnet, dass** die Innenkontur der Überschalldüse der auf numerischem Wege mit einem modifizierten Charakteristikenverfahren ermittelten Kontur entspricht, wobei das Verhältnis der Düsenlänge l zum Radius im engsten Querschnitt r*, also l/r*, zwischen 2,1 und 11,6, bevorzugt zwischen 2,1 und 8,3, noch bevorzugter zwischen 2,1 und 5,4, noch bevorzugter zwischen 2,1 und 5,0 liegt, und insbesondere Werte von 11,6, 8,3, 5,4, 5,0, 4,8, 4,2, 4,1, 3,6, 3,3, 3,1 oder 2,1 aufweist.

**3.** Überschalldüse gemäß Anspruch 2, wobei die Innenkontur der Überschalldüse der ermittelten Kontur entspricht, die durch numerische Lösung der partiellen gasdynamischen Differentialgleichungen ermittelt wird, bei welchen die stationäre, isentrope, rotationssymmetrische Gasströmung mittels räumlich diskretisierter Charakteristikengleichungen unter Berücksichtigung entsprechender Kompatibilitätsbedingungen dargestellt ist.

**4.** Überschalldüse gemäß Anspruch 3, wobei bei der Lösung der partiellen numerischen Differentialgleichungen der Einfluss einer reibungsbehafteten, wandnahen Grenzschichtströmung berücksichtigt wird.

**5.** Überschalldüse gemäß einem der vorstehenden Ansprüche, wobei der konvergente Abschnitt eine glockenförmige Kontur aufweist und der divergente Abschnitt eine glockenförmige Kontur aufweist, wobei die glockenförmigen Konturen des konvergenten Abschnittes und des divergenten Abschnittes an der Düsenkehle stetig ineinander übergehen.

**6.** Überschalldüse gemäß einem der vorstehenden Ansprüche, wobei die Überschalldüse Kühlkanäle aufweist.

**7.** Überschalldüse gemäß einem der vorstehenden Ansprüche, wobei sich die Innenkontur des divergenten Abschnitts der Überschalldüse nicht durch eine eindeutige mathematische Funktion darstellen lässt.

**8.** Verfahren zur Ermittlung der Dimensionen einer Überschalldüse gemäß einem der vorstehenden Ansprüche, wobei das Verfahren umfasst:

Ermitteln einer Kontur auf numerischem Wege mit einem modifizierten Charakteristikenverfahren, und Ausbilden der Innenkontur der Überschalldüse anhand der ermittelten Kontur, wobei das Verhältnis der Düsenlänge $l$ zum Radius im engsten Querschnitt $r^*$, also $l/r^*$, zwischen 2,1 und 11,6, bevorzugt zwischen 2,1 und 8,3, noch bevorzugter zwischen 2,1 und 5,4, noch bevorzugter zwischen 2,1 und 5,0 liegt, und insbesondere Werte von 11,6, 8,3, 5,4, 5,0, 4,8, 4,2, 4,1, 3,6, 3,3, 3,1 oder 2,1 aufweist.

**9.** Verfahren gemäß Anspruch 8, wobei die Kontur durch numerische Lösung der partiellen gasdynamischen Differentialgleichungen ermittelt wird, bei welchen die stationäre, isentrope, rotationssymmetrische Gasströmung mittels räumlich diskretisierten Charakteristikengleichungen unter Berücksichtigung entsprechender Kompatibilitätsbedingungen dargestellt ist.

**10.** Verfahren gemäß Anspruch 9, wobei die Lösung der partiellen numerischen Differentialgleichungen um den Einfluss einer reibungsbehafteten, wandnahen Grenzschichtströmung korrigiert wird.

**11.** Überschalldüse zum Einsatz in metallurgischen Anlagen zum Aufblasen eines Gases in einem Basic Oxygen Furnace (BOF), in einem Argon Oxygen Decarburization (AOD) Konverter, oder in einem Elektrolichtbogenofen (EAF), **dadurch gekennzeichnet, dass** die Innenkontur der Überschalldüse der auf numerischem Wege mit einem modifizierten Charakteristikenverfahren ermittelten Kontur entspricht und die folgend dimensionierte Innenkontur im folgenden Auslegungsfall aufweist:

| | | |
|---|---|---|
| Eintrittsdruck $p_0$ = 10 bar<br>Eintrittsvolumenstrom $\dot{V}_0$ = 50 Nm$^3$/min<br>Umgebungsdruck $p_u$ = 1.013 bar. | | |
| | mit Grenzschichtkorrektur | ohne Grenzschichtkorrektur |
| x in mm | r in mm | r in mm |
| -17.32 | 16.68 | 16.66 |
| -16.77 | 16.66 | 16.63 |
| -16.22 | 16.62 | 16.59 |
| -15.67 | 16.57 | 16.53 |
| -15.12 | 16.51 | 16.46 |
| -14.57 | 16.43 | 16.38 |
| -14.03 | 16.34 | 16.29 |
| -13.48 | 16.24 | 16.18 |
| -12.93 | 16.13 | 16.06 |
| -12.38 | 16.00 | 15.93 |
| -11.83 | 15.86 | 15.79 |

(fortgesetzt)

| x in mm | mit Grenzschichtkorrektur<br>r in mm | ohne Grenzschichtkorrektur<br>r in mm |
|---|---|---|
| -11.28 | 15.70 | 15.63 |
| -10.73 | 15.54 | 15.46 |
| -10.18 | 15.35 | 15.27 |
| -9.63 | 15.16 | 15.07 |
| -9.08 | 14.96 | 14.87 |
| -8.53 | 14.76 | 14.67 |
| -7.98 | 14.57 | 14.47 |
| -7.43 | 14.37 | 14.27 |
| -6.88 | 14.17 | 14.07 |
| -6.33 | 13.98 | 13.87 |
| -5.78 | 13.78 | 13.67 |
| -5.23 | 13.58 | 13.47 |
| -4.69 | 13.38 | 13.27 |
| -4.14 | 13.19 | 13.07 |
| -3.59 | 13.01 | 12.89 |
| -3.04 | 12.86 | 12.74 |
| -2.49 | 12.73 | 12.61 |
| -1.94 | 12.64 | 12.51 |
| -1.39 | 12.56 | 12.44 |
| -0.84 | 12.52 | 12.39 |
| -0.29 | 12.49 | 12.36 |
| 0.26 | 12.49 | 12.36 |
| 0.81 | 12.50 | 12.36 |
| 1.36 | 12.52 | 12.38 |
| 1.91 | 12.54 | 12.39 |
| 2.46 | 12.57 | 12.42 |
| 3.01 | 12.60 | 12.45 |
| 3.56 | 12.64 | 12.49 |
| 4.11 | 12.69 | 12.53 |
| 4.65 | 12.74 | 12.58 |
| 5.20 | 12.80 | 12.63 |
| 5.75 | 12.87 | 12.69 |
| 6.30 | 12.94 | 12.76 |
| 6.85 | 13.02 | 12.83 |
| 7.40 | 13.10 | 12.91 |
| 7.95 | 13.18 | 12.99 |
| 8.50 | 13.27 | 13.07 |

(fortgesetzt)

| x in mm | mit Grenzschichtkorrektur | ohne Grenzschichtkorrektur |
|---------|----------------------------|-----------------------------|
|         | r in mm                    | r in mm                     |
| 9.05    | 13.36                      | 13.16                       |
| 9.60    | 13.44                      | 13.24                       |
| 10.15   | 13.53                      | 13.32                       |
| 10.70   | 13.62                      | 13.41                       |
| 11.25   | 13.71                      | 13.49                       |
| 11.80   | 13.80                      | 13.58                       |
| 12.35   | 13.89                      | 13.67                       |
| 12.90   | 13.98                      | 13.75                       |
| 13.45   | 14.07                      | 13.84                       |
| 13.99   | 14.16                      | 13.92                       |
| 14.54   | 14.24                      | 14.00                       |
| 15.09   | 14.33                      | 14.09                       |
| 15.64   | 14.42                      | 14.17                       |
| 16.19   | 14.50                      | 14.25                       |
| 16.74   | 14.59                      | 14.33                       |
| 17.29   | 14.67                      | 14.41                       |
| 17.84   | 14.76                      | 14.49                       |
| 18.39   | 14.84                      | 14.57                       |
| 18.94   | 14.92                      | 14.65                       |
| 19.49   | 15.00                      | 14.73                       |
| 20.04   | 15.08                      | 14.80                       |
| 20.59   | 15.16                      | 14.88                       |
| 21.14   | 15.23                      | 14.95                       |
| 21.69   | 15.31                      | 15.02                       |
| 22.24   | 15.39                      | 15.10                       |
| 22.78   | 15.46                      | 15.17                       |
| 23.33   | 15.53                      | 15.24                       |
| 23.88   | 15.60                      | 15.30                       |
| 24.43   | 15.67                      | 15.37                       |
| 24.98   | 15.74                      | 15.44                       |
| 25.53   | 15.81                      | 15.50                       |
| 26.08   | 15.88                      | 15.56                       |
| 26.63   | 15.94                      | 15.62                       |
| 27.18   | 16.01                      | 15.69                       |
| 27.73   | 16.07                      | 15.74                       |
| 28.28   | 16.13                      | 15.80                       |
| 28.83   | 16.19                      | 15.86                       |

(fortgesetzt)

| x in mm | mit Grenzschichtkorrektur | ohne Grenzschichtkorrektur |
|---------|---------------------------|----------------------------|
|         | r in mm                   | r in mm                    |
| 29.38   | 16.25                     | 15.92                      |
| 29.83   | 16.31                     | 15.97                      |
| 30.48   | 16.37                     | 16.02                      |
| 31.03   | 16.42                     | 16.08                      |
| 31.58   | 16.48                     | 16.13                      |
| 32.12   | 16.53                     | 16.18                      |
| 32.67   | 16.58                     | 16.22                      |
| 33.22   | 16.63                     | 16.27                      |
| 33.77   | 16.68                     | 16.32                      |
| 34.32   | 16.73                     | 16.36                      |
| 34.87   | 16.78                     | 16.41                      |
| 35.42   | 16.82                     | 16.45                      |
| 35.97   | 16.87                     | 16.49                      |
| 36.52   | 16.91                     | 16.53                      |
| 37.07   | 16.96                     | 16.57                      |
| 37.62   | 17.00                     | 16.60                      |
| 38.17   | 17.04                     | 16.64                      |
| 38.72   | 17.08                     | 16.68                      |
| 39.27   | 17.11                     | 16.71                      |
| 39.82   | 17.15                     | 16.74                      |
| 40.37   | 17.18                     | 16.78                      |
| 40.92   | 17.22                     | 16.81                      |
| 41.46   | 17.25                     | 16.84                      |
| 42.01   | 17.28                     | 16.86                      |
| 42.56   | 17.32                     | 16.89                      |
| 43.11   | 17.34                     | 16.92                      |
| 43.66   | 17.37                     | 16.94                      |
| 44.21   | 17.40                     | 16.97                      |
| 44.78   | 17.43                     | 16.99                      |
| 45.31   | 17.45                     | 17.01                      |
| 45.88   | 17.48                     | 17.03                      |
| 46.41   | 17.50                     | 17.05                      |
| 46.98   | 17.53                     | 17.07                      |
| 47.51   | 17.55                     | 17.09                      |
| 48.06   | 17.57                     | 17.11                      |
| 48.61   | 17.58                     | 17.13                      |
| 49.18   | 17.61                     | 17.14                      |

(fortgesetzt)

| x in mm | mit Grenzschichtkorrektur | ohne Grenzschichtkorrektur |
|---|---|---|
| | r in mm | r in mm |
| 49.71 | 17.62 | 17.16 |
| 50.26 | 17.64 | 17.17 |
| 50.80 | 17.66 | 17.18 |
| 51.35 | 17.67 | 17.19 |
| 51.90 | 17.69 | 17.21 |
| 52.45 | 17.70 | 17.22 |
| 53.00 | 17.71 | 17.23 |
| 53.55 | 17.73 | 17.23 |
| 54.10 | 17.74 | 17.24 |
| 54.65 | 17.75 | 17.25 |
| 55.20 | 17.76 | 17.26 |
| 55.75 | 17.77 | 17.26 |
| 56.30 | 17.78 | 17.27 |
| 56.85 | 17.78 | 17.27 |
| 57.40 | 17.79 | 17.28 |
| 57.95 | 17.80 | 17.28 |
| 58.50 | 17.80 | 17.28 |
| 59.05 | 17.81 | 17.29 |
| 59.60 | 17.81 | 17.29 |
| 60.14 | 17.82 | 17.29 |
| 60.69 | 17.82 | 17.29 |
| 61.24 | 17.83 | 17.29 |
| 61.79 | 17.83 | 17.29 |

**12.** Überschalldüse zum Einsatz in metallurgischen Anlagen zum Aufblasen eines Gases in einem Basic Oxygen Furnace (BOF), in einem Argon Oxygen Decarburization (AOD) Konverter, oder einem Elektrolichtbogenofen (EAF), **dadurch gekennzeichnet, dass** die Innenkontur der Überschalldüse der auf numerischem Wege mit einem modifizierten Charakteristikenverfahren ermittelten Kontur entspricht und die folgend dimensionierte Innenkontur im folgenden Auslegungsfall aufweist:

| | | |
|---|---|---|
| Eintrittsdruck $p_0 = 12$ bar | | |
| Eintrittsvolumenstrom $\dot{V}_0 = 140$ Nm$^3$/min | | |
| Umgebungsdruck $p_u = 1.013$ bar. | | |
| | mit Grenzschichtkorrektur | ohne Grenzschichtkorrektur |
| x in mm | r in mm | r in mm |
| -27.00 | 25.49 | 25.47 |
| -26.44 | 25.48 | 25.45 |

(fortgesetzt)

| | mit Grenzschichtkorrektur | ohne Grenzschichtkorrektur |
|---|---|---|
| x in mm | r in mm | r in mm |
| -25.87 | 25.45 | 25.42 |
| -25.30 | 25.42 | 25.38 |
| -24.74 | 25.38 | 25.33 |
| -24.17 | 25.33 | 25.27 |
| -23.60 | 25.27 | 25.21 |
| -23.03 | 25.20 | 25.14 |
| -22.47 | 25.12 | 25.06 |
| -21.90 | 25.04 | 24.96 |
| -21.33 | 24.94 | 24.87 |
| -20.76 | 24.83 | 24.76 |
| -20.20 | 24.72 | 24.64 |
| -19.63 | 24.60 | 24.51 |
| -19.06 | 24.47 | 24.38 |
| -18.50 | 24.32 | 24.23 |
| -17.93 | 24.17 | 24.08 |
| -17.36 | 24.01 | 23.91 |
| -16.79 | 23.84 | 23.74 |
| -16.23 | 23.66 | 23.56 |
| -15.66 | 23.47 | 23.36 |
| -15.09 | 23.27 | 23.16 |
| -14.53 | 23.07 | 22.95 |
| -13.96 | 22.86 | 22.75 |
| -13.39 | 22.66 | 22.54 |
| -12.82 | 22.46 | 22.33 |
| -12.26 | 22.25 | 22.13 |
| -11.69 | 22.05 | 21.92 |
| -11.12 | 21.85 | 21.71 |
| -10.56 | 21.64 | 21.51 |
| -9.99 | 21.44 | 21.30 |
| -9.42 | 21.23 | 21.09 |
| -8.85 | 21.03 | 20.89 |
| -8.29 | 20.83 | 20.68 |
| -7.72 | 20.62 | 20.48 |
| -7.15 | 20.42 | 20.27 |
| -6.59 | 20.21 | 20.06 |
| -6.02 | 20.02 | 19.86 |
| -5.45 | 19.84 | 19.68 |

(fortgesetzt)

|  | mit Grenzschichtkorrektur | ohne Grenzschichtkorrektur |
|---|---|---|
| x in mm | r in mm | r in mm |
| -4.88 | 19.68 | 19.52 |
| -4.32 | 19.54 | 19.38 |
| -3.75 | 19.41 | 19.25 |
| -3.18 | 19.31 | 19.15 |
| -2.62 | 19.22 | 19.06 |
| -2.05 | 19.15 | 18.99 |
| -1.48 | 19.10 | 18.94 |
| -0.91 | 19.07 | 18.90 |
| -0.35 | 19.05 | 18.88 |
| 0.22 | 19.05 | 18.88 |
| 0.79 | 19.06 | 18.88 |
| 1.35 | 19.07 | 18.89 |
| 1.92 | 19.09 | 18.90 |
| 2.49 | 19.11 | 18.92 |
| 3.06 | 19.13 | 18.94 |
| 3.62 | 19.16 | 18.96 |
| 4.19 | 19.19 | 18.99 |
| 4.76 | 19.23 | 19.03 |
| 5.32 | 19.27 | 19.06 |
| 5.89 | 19.32 | 19.11 |
| 6.46 | 19.37 | 19.15 |
| 7.03 | 19.42 | 19.20 |
| 7.59 | 19.48 | 19.26 |
| 8.16 | 19.54 | 19.32 |
| 8.73 | 19.61 | 19.38 |
| 9.29 | 19.68 | 19.45 |
| 9.86 | 19.76 | 19.52 |
| 10.43 | 19.84 | 19.60 |
| 11.00 | 19.82 | 19.68 |
| 11.56 | 20.01 | 19.76 |
| 12.13 | 20.10 | 19.85 |
| 12.70 | 20.20 | 19.94 |
| 13.26 | 20.29 | 20.03 |
| 13.83 | 20.39 | 20.12 |
| 14.40 | 20.48 | 20.22 |
| 14.97 | 20.58 | 20.31 |
| 15.53 | 20.68 | 20.41 |

(fortgesetzt)

| x in mm | mit Grenzschichtkorrektur | ohne Grenzschichtkorrektur |
|---|---|---|
| | r in mm | r in mm |
| 16.10 | 20.78 | 20.50 |
| 16.67 | 20.88 | 20.60 |
| 17.23 | 20.98 | 20.69 |
| 17.80 | 21.08 | 20.79 |
| 18.37 | 21.18 | 20.89 |
| 18.94 | 21.28 | 20.98 |
| 19.50 | 21.38 | 21.08 |
| 20.07 | 21.48 | 21.18 |
| 20.64 | 21.58 | 21.27 |
| 21.21 | 21.68 | 21.37 |
| 21.77 | 21.78 | 21.47 |
| 22.34 | 21.88 | 21.56 |
| 22.91 | 21.97 | 21.66 |
| 23.47 | 22.07 | 21.75 |
| 24.04 | 22.17 | 21.85 |
| 24.61 | 22.27 | 21.94 |
| 25.18 | 22.37 | 22.03 |
| 25.74 | 22.46 | 22.13 |
| 26.31 | 22.56 | 22.22 |
| 26.88 | 22.65 | 22.31 |
| 27.44 | 22.75 | 22.40 |
| 28.01 | 22.84 | 22.50 |
| 28.58 | 22.94 | 22.59 |
| 29.15 | 23.03 | 22.68 |
| 29.71 | 23.12 | 22.77 |
| 30.28 | 23.21 | 22.85 |
| 30.85 | 23.31 | 22.94 |
| 31.41 | 23.40 | 23.03 |
| 31.98 | 23.49 | 23.12 |
| 32.55 | 23.58 | 23.20 |
| 33.12 | 23.68 | 23.29 |
| 33.68 | 23.75 | 23.37 |
| 34.28 | 23.84 | 23.45 |
| 34.82 | 23.92 | 23.54 |
| 35.38 | 24.01 | 23.62 |
| 35.95 | 24.09 | 23.70 |
| 36.52 | 24.18 | 23.78 |

(fortgesetzt)

|  | mit Grenzschichtkorrektur | ohne Grenzschichtkorrektur |
|---|---|---|
| x in mm | r in mm | r in mm |
| 37.09 | 24.26 | 23.86 |
| 37.65 | 24.34 | 23.94 |
| 38.22 | 24.42 | 24.02 |
| 38.79 | 24.51 | 24.09 |
| 39.35 | 24.58 | 24.17 |
| 39.92 | 24.68 | 24.25 |
| 40.49 | 24.74 | 24.32 |
| 41.06 | 24.82 | 24.40 |
| 41.62 | 24.90 | 24.47 |
| 42.19 | 24.97 | 24.54 |
| 42.76 | 25.05 | 24.61 |
| 43.32 | 25.12 | 24.68 |
| 43.69 | 25.19 | 24.75 |
| 44.46 | 25.26 | 24.82 |
| 45.03 | 25.34 | 24.89 |
| 45.59 | 25.41 | 24.96 |
| 46.16 | 25.48 | 25.02 |
| 46.73 | 25.55 | 25.09 |
| 47.29 | 25.61 | 25.15 |
| 47.86 | 25.68 | 25.22 |
| 48.43 | 25.75 | 25.28 |
| 49.00 | 25.81 | 25.34 |
| 49.56 | 25.88 | 25.40 |
| 50.13 | 25.94 | 25.46 |
| 50.70 | 26.00 | 25.52 |
| 51.26 | 26.07 | 25.58 |
| 51.83 | 26.13 | 25.64 |
| 52.40 | 26.19 | 25.70 |
| 52.97 | 26.25 | 25.75 |
| 53.53 | 26.30 | 25.81 |
| 54.10 | 26.36 | 25.86 |
| 54.67 | 26.42 | 25.92 |
| 55.23 | 26.48 | 25.97 |
| 55.80 | 26.53 | 26.02 |
| 56.37 | 26.59 | 26.07 |
| 56.94 | 26.64 | 26.12 |
| 57.50 | 26.69 | 26.17 |

(fortgesetzt)

| x in mm | mit Grenzschichtkorrektur | ohne Grenzschichtkorrektur |
|---|---|---|
| | r in mm | r in mm |
| 58.07 | 26.74 | 26.22 |
| 58.64 | 26.80 | 26.27 |
| 59.20 | 26.85 | 26.32 |
| 59.77 | 26.90 | 26.36 |
| 60.34 | 26.94 | 26.41 |
| 60.91 | 26.99 | 26.46 |
| 61.47 | 27.04 | 26.50 |
| 62.04 | 27.09 | 26.54 |
| 62.61 | 27.13 | 26.58 |
| 63.18 | 27.18 | 26.83 |
| 63.74 | 27.22 | 26.67 |
| 64.31 | 27.26 | 26.71 |
| 64.88 | 27.31 | 26.75 |
| 65.44 | 27.35 | 26.78 |
| 66.01 | 27.39 | 26.82 |
| 66.58 | 27.43 | 26.86 |
| 67.15 | 27.47 | 26.90 |
| 67.71 | 27.51 | 26.93 |
| 68.28 | 27.55 | 26.97 |
| 68.85 | 27.58 | 27.00 |
| 69.41 | 27.62 | 27.03 |
| 69.98 | 27.66 | 27.07 |
| 70.55 | 27.69 | 27.10 |
| 71.12 | 27.73 | 27.13 |
| 71.68 | 27.76 | 27.16 |
| 72.25 | 27.79 | 27.19 |
| 72.82 | 27.82 | 27.22 |
| 73.38 | 27.86 | 27.25 |
| 73.95 | 27.89 | 27.27 |
| 74.52 | 27.92 | 27.30 |
| 75.09 | 27.95 | 27.33 |
| 75.65 | 27.97 | 27.35 |
| 76.22 | 28.00 | 27.38 |
| 76.79 | 28.03 | 27.40 |
| 77.35 | 28.06 | 27.43 |
| 77.92 | 28.08 | 27.45 |
| 78.49 | 28.11 | 27.47 |

(fortgesetzt)

| | mit Grenzschichtkorrektur | ohne Grenzschichtkorrektur |
|---|---|---|
| x in mm | r in mm | r in mm |
| 79.08 | 28.13 | 27.49 |
| 79.62 | 28.16 | 27.51 |
| 80.19 | 28.18 | 27.53 |
| 80.76 | 28.20 | 27.55 |
| 81.32 | 28.23 | 27.57 |
| 81.89 | 28.25 | 27.59 |
| 82.46 | 28.27 | 27.61 |
| 83.03 | 28.29 | 27.63 |
| 83.59 | 28.31 | 27.64 |
| 84.16 | 28.33 | 27.66 |
| 84.73 | 28.35 | 27.68 |
| 85.29 | 28.37 | 27.69 |
| 85.86 | 28.38 | 27.70 |
| 86.43 | 28.40 | 27.72 |
| 87.00 | 28.42 | 27.73 |
| 87.56 | 28.43 | 27.74 |
| 88.13 | 28.45 | 27.76 |
| 88.70 | 28.46 | 27.77 |
| 89.26 | 28.48 | 27.78 |
| 89.83 | 28.49 | 27.79 |
| 90.40 | 28.50 | 27.80 |
| 90.97 | 28.52 | 27.81 |
| 91.53 | 28.53 | 27.82 |
| 92.10 | 28.54 | 27.83 |
| 92.67 | 28.55 | 27.84 |
| 93.23 | 28.56 | 27.84 |
| 93.80 | 28.57 | 27.85 |
| 94.37 | 28.58 | 27.86 |
| 94.94 | 28.59 | 27.86 |
| 95.50 | 28.60 | 27.87 |
| 96.07 | 28.61 | 27.88 |
| 96.64 | 28.62 | 27.88 |
| 97.20 | 28.62 | 27.89 |
| 97.77 | 28.63 | 27.89 |
| 98.34 | 28.64 | 27.89 |
| 98.91 | 28.64 | 27.90 |
| 99.47 | 28.65 | 27.90 |

(fortgesetzt)

| | mit Grenzschichtkorrektur | ohne Grenzschichtkorrektur |
|---|---|---|
| x in mm | r in mm | r in mm |
| 100.04 | 28.66 | 27.90 |
| 100.61 | 28.66 | 27.91 |
| 101.17 | 28.67 | 27.91 |
| 101.74 | 28.67 | 27.91 |
| 102.31 | 28.67 | 27.91 |
| 102.88 | 28.68 | 27.91 |
| 103.44 | 28.68 | 27.91 |
| 104.01 | 28.69 | 27.91 |
| 104.58 | 28.69 | 27.92 |
| 105.14 | 28.69 | 27.92 |
| 105.71 | 28.69 | 27.92 |

**Claims**

1. Supersonic nozzle for use in metallurgical plants for top-blowing of a gas in a basic oxygen furnace (BOF), in an argon oxygen decarburisation (AOD) converter or an electric arc furnace (EAF), with a convergent section and a divergent section adjoining one another at a nozzle throat (DK), **characterised in that** the internal path of the supersonic nozzle corresponds with a profile determined on a numerical route by a modified characteristics method and the supersonic nozzle is defined by the following family of nozzle shapes in the respective design case thereof:

| Pressure $P_0$ in bar | Volume flow $\dot{V}$ in $Nm^3/min$ | Radius at the narrowest cross-section $r^*$ in mm | Exit radius $r_e$ in mm | Max. nozzle length l in mm |
|---|---|---|---|---|
| 4 | 20 | 12.0 | 14.0 | 50 $\pm$ 20 |
| 4 | 200 | 39 | 44.0 | 160 $\pm$ 20 |
| 14 | 20 | 6 | 10.0 | 50 $\pm$ 20 |
| 14 | 200 | 21 | 33.0 | 160 $\pm$ 20 |

wherein the ratio of the nozzle length l to the radius r* at the narrowest cross-section, thus l/r*, is between 2.1 and 11.6, preferably between 2.1 and 8.3, more preferably between 2.1 and 5.4, even more preferably between 2.1 and 5.0, and has, in particular, a value of 11.6, 8.3, 5.4, 5.0, 4.8, 4.2, 4.1, 3.6, 3.3, 3.1 or 2.1.

2. Supersonic nozzle for use in metallurgical plants for top-blowing of oxygen in a basic oxygen furnace (BOF), in an argon oxygen decarburisation (AOD) converter or an electric arc furnace (EAF), with a convergent section and a divergent section adjoining one another at a nozzle throat (DK), **characterised in that** the internal profile of the supersonic nozzle corresponds with a profile determined on a numerical path by a modified characteristics method, wherein the ratio of the nozzle length l to the radius r* at the narrowest cross-section, thus l/r*, is between 2.1 and 11.6, preferably between 2.1 and 8.3, more preferably between 2.1 and 5.4, even more preferably between 2.1 and 5.0, and has, in particular, a value of 11.6, 8.3, 5.4, 5.0, 4.8, 4.2, 4.1, 3.6, 3.3, 3.1 or 2.1.

3. Supersonic nozzle according to claim 2, wherein the internal profile of the supersonic nozzle corresponds with the determined profile which is determined by numerical solution of the partial gas-dynamic differential equations in which the stationary, isentropic, rotationally symmetrical gas flow is represented by means of physically discrete characteristics equations with consideration of appropriate compatibility conditions.

4. Supersonic nozzle according to claim 3, wherein the influence of the boundary layer flow in wall proximity and subject

22

to friction is taken into consideration in the solution of the partial numerical differential equations.

5. Supersonic nozzle according to any one of the preceding claims, wherein the convergent section has a bell-shaped profile and the divergent section a bell-shaped profile, wherein the bell-shaped profiles of the convergent section and of the divergent section have a continuous transition from one to the other at the nozzle throat.

6. Supersonic nozzle according to any one of the preceding claims, wherein the supersonic nozzle has cooling channels.

7. Supersonic nozzle according to any one of the preceding claims, wherein the internal profile of the divergent section of the supersonic nozzle cannot be represented by a unique mathematical function.

8. Method for determining the dimensions of a supersonic nozzle according to any one of the preceding claims, wherein the method comprises:

   determining a profile on a numerical path by a modified characteristics method and
   forming the internal profile of the supersonic nozzle on the basis of the determined profile,
   wherein the ratio of the nozzle length l to the radius $r^*$ at the narrowest cross-section, thus $l/r^*$, is between 2.1 and 11.6, preferably between 2.1 and 8.3, more preferably between 2.1 and 5.4, even more preferably between 2.1 and 5.0, and has, in particular, a value of 11.6, 8.3, 5.4, 5.0, 4.8, 4.2, 4.1, 3.6, 3.3, 3.1 or 2.1.

9. Method according to claim 8, wherein the profile is determined by numerical solution of the partial gas-dynamic differential equations, in which the stationary, isentropic, rotationally symmetrical gas flow is illustrated by means of physically discrete characteristics equations with consideration of appropriate compatibility conditions.

10. Method according to claim 9, wherein the solution of the partial numerical differential equations is corrected by the influence of a boundary layer flow with wall proximity and subject to friction.

11. Supersonic nozzle for use in metallurgical plants for top-blowing of a gas in a basic oxygen furnace (BOF), in an argon oxygen decarburisation (AOD) converter or an electric arc furnace (EAF), **characterised in that** the internal profile of the supersonic nozzle corresponds with a profile determined on a numerical path by a modified characteristics method and has the following dimensioned internal profile in the following design case:

| | | |
|---|---|---|
| Inlet pressure $p_0$ = 10 bar<br>Inlet volume flow $\dot{V}_0$ = 50 Nm$^3$/min<br>Ambient pressure $p_u$ = 1.013 bar | | |
| | with boundary layer correction | without boundary layer correction |
| x inmm | r in mm | r in mm |
| -17.32 | 16.68 | 16.66 |
| -16.77 | 16.66 | 16.63 |
| -16.22 | 16.62 | 16.59 |
| -15.67 | 16.57 | 16.53 |
| -15.12 | 16.51 | 16.46 |
| -14.57 | 16.43 | 16.38 |
| -14.03 | 16.34 | 16.29 |
| -13.48 | 16.24 | 16.18 |
| -12.93 | 16.13 | 16.06 |
| -12.38 | 16.00 | 15.93 |
| -11.83 | 15.86 | 15.79 |

(continued)

|  | with boundary layer correction | without boundary layer correction |
|---|---|---|
| x inmm | r in mm | r in mm |
| -11.28 | 15.70 | 15.63 |
| -10.73 | 15.54 | 15.46 |
| -10.18 | 15.35 | 15.27 |
| -9.63 | 15.16 | 15.07 |
| -9.08 | 14.96 | 14.87 |
| -8.53 | 14.76 | 14.67 |
| -7.98 | 14.57 | 14.47 |
| -7.43 | 14.37 | 14.27 |
| -6.88 | 14.17 | 14.07 |
| -6.33 | 13.98 | 13.87 |
| -5.78 | 13.78 | 13.67 |
| -5.23 | 13.58 | 13.47 |
| -4.69 | 13.38 | 13.27 |
| -4.14 | 13.19 | 13.07 |
| -3.59 | 13.01 | 12.89 |
| -3.04 | 12.86 | 12.74 |
| -2.49 | 12.73 | 12.61 |
| -1.94 | 12.64 | 12.51 |
| -1.39 | 12.56 | 12.44 |
| -0.84 | 12.52 | 12.39 |
| -0.29 | 12.49 | 12.36 |
| 0.26 | 12.49 | 12.36 |
| 0.81 | 12.50 | 12.36 |
| 1.36 | 12.52 | 12.38 |
| 1.91 | 12.54 | 12.39 |
| 2.46 | 12.57 | 12.42 |
| 3.01 | 12.60 | 12.45 |
| 3.56 | 12.64 | 12.49 |
| 4.11 | 12.69 | 12.53 |
| 4.65 | 12.74 | 12.58 |
| 5.20 | 12.80 | 12.63 |
| 5.75 | 12.87 | 12.69 |
| 6.30 | 12.94 | 12.76 |
| 6.85 | 13.02 | 12.83 |
| 7.40 | 13.10 | 12.91 |
| 7.95 | 13.18 | 12.99 |
| 8.50 | 13.27 | 13.07 |

(continued)

|  | with boundary layer correction | without boundary layer correction |
|---|---|---|
| x inmm | r in mm | r in mm |
| 9.05 | 13.36 | 13.16 |
| 9.60 | 13.44 | 13.24 |
| 10.15 | 13.53 | 13.32 |
| 10.70 | 13.62 | 13.41 |
| 11.25 | 13.71 | 13.49 |
| 11.80 | 13.80 | 13.58 |
| 12.35 | 13.89 | 13.67 |
| 12.90 | 13.98 | 13.75 |
| 13.45 | 14.07 | 13.84 |
| 13.99 | 14.16 | 13.92 |
| 14.54 | 14.24 | 14.00 |
| 15.09 | 14.33 | 14.09 |
| 15.64 | 14.42 | 14.17 |
| 16.19 | 14.50 | 14.25 |
| 16.74 | 14.59 | 14.33 |
| 17.29 | 14.67 | 14.41 |
| 17.84 | 14.76 | 14.49 |
| 18.39 | 14.84 | 14.57 |
| 18.94 | 14.92 | 14.65 |
| 19.49 | 15.00 | 14.73 |
| 20.04 | 15.08 | 14.80 |
| 20.59 | 15.16 | 14.88 |
| 21.14 | 15.23 | 14.95 |
| 21.69 | 15.31 | 15.02 |
| 22.24 | 15.39 | 15.10 |
| 22.78 | 15.46 | 15.17 |
| 23.33 | 15.53 | 15.24 |
| 23.88 | 15.60 | 15.30 |
| 24.43 | 15.67 | 15.37 |
| 24.98 | 15.74 | 15.44 |
| 25.53 | 15.81 | 15.50 |
| 26.08 | 15.88 | 15.56 |
| 26.63 | 15.94 | 15.62 |
| 27.18 | 16.01 | 15.69 |
| 27.73 | 16.07 | 15.74 |
| 28.28 | 16.13 | 15.80 |
| 28.83 | 16.19 | 15.86 |

(continued)

| x in mm | with boundary layer correction<br>r in mm | without boundary layer correction<br>r in mm |
|---|---|---|
| 29.38 | 16.25 | 15.92 |
| 29.83 | 16.31 | 15.97 |
| 30.48 | 16.37 | 16.02 |
| 31.03 | 16.42 | 16.08 |
| 31.58 | 16.48 | 16.13 |
| 32.12 | 16.53 | 16.18 |
| 32.67 | 16.58 | 16.22 |
| 33.22 | 16.63 | 16.27 |
| 33.77 | 16.68 | 16.32 |
| 34.32 | 16.73 | 16.36 |
| 34.87 | 16.78 | 16.41 |
| 35.42 | 16.82 | 16.45 |
| 35.97 | 16.87 | 16.49 |
| 36.52 | 16.91 | 16.53 |
| 37.07 | 16.96 | 16.57 |
| 37.62 | 17.00 | 16.60 |
| 38.17 | 17.04 | 16.64 |
| 38.72 | 17.08 | 16.68 |
| 39.27 | 17.11 | 16.71 |
| 39.82 | 17.15 | 16.74 |
| 40.37 | 17.18 | 16.78 |
| 40.92 | 17.22 | 16.81 |
| 41.46 | 17.25 | 16.84 |
| 42.01 | 17.28 | 16.86 |
| 42.56 | 17.32 | 16.89 |
| 43.11 | 17.34 | 16.92 |
| 43.66 | 17.37 | 16.94 |
| 44.21 | 17.40 | 16.97 |
| 44.78 | 17.43 | 16.99 |
| 45.31 | 17.45 | 17.01 |
| 45.88 | 17.48 | 17.03 |
| 46.41 | 17.50 | 17.05 |
| 46.98 | 17.53 | 17.07 |
| 47.51 | 17.55 | 17.09 |
| 48.06 | 17.57 | 17.11 |
| 48.61 | 17.58 | 17.13 |
| 49.18 | 17.61 | 17.14 |

(continued)

|  | with boundary layer correction | without boundary layer correction |
|---|---|---|
| x inmm | r in mm | r in mm |
| 49.71 | 17.62 | 17.16 |
| 50.26 | 17.64 | 17.17 |
| 50.80 | 17.66 | 17.18 |
| 51.35 | 17.67 | 17.19 |
| 51.90 | 17.69 | 17.21 |
| 52.45 | 17.70 | 17.22 |
| 53.00 | 17.71 | 17.23 |
| 53.55 | 17.73 | 17.23 |
| 54.10 | 17.74 | 17.24 |
| 54.65 | 17.75 | 17.25 |
| 55.20 | 17.76 | 17.26 |
| 55.75 | 17.77 | 17.26 |
| 56.30 | 17.78 | 17.27 |
| 56.85 | 17.78 | 17.27 |
| 57.40 | 17.79 | 17.28 |
| 57.95 | 17.80 | 17.28 |
| 58.50 | 17.80 | 17.28 |
| 59.05 | 17.81 | 17.29 |
| 59.60 | 17.81 | 17.29 |
| 60.14 | 17.82 | 17.29 |
| 60.69 | 17.82 | 17.29 |
| 61.24 | 17.83 | 17.29 |
| 61.79 | 17.83 | 17.29 |

12. Supersonic nozzle for use in metallurgical plants for top-blowing of a gas in a basic oxygen furnace (BOF), in an argon oxygen decarburisation (AOD) converter or an electric arc furnace (EAF), **characterised in that** the internal profile of the supersonic nozzle corresponds with a profile determined on a numerical path by a modified characteristics method and has the following dimensioned internal profile in the following design case:

| | | |
|---|---|---|
| Inlet pressure $p_0$ = 12 bar<br>Inlet volume flow $\dot{V}_0$ = 140 Nm$^3$/min<br>Ambient pressure $p_u$ = 1.013 bar | | |
|  | with boundary layer correction | without boundary layer correction |
| x in mm | r in mm | r in mm |
| -27.00 | 25.49 | 25.47 |
| -26.44 | 25.48 | 25.45 |
| -25.87 | 25.45 | 25.42 |

(continued)

| x in mm | with boundary layer correction<br>r in mm | without boundary layer correction<br>r in mm |
|---|---|---|
| -25.30 | 25.42 | 25.38 |
| -24.74 | 25.38 | 25.33 |
| -24.17 | 25.33 | 25.27 |
| -23.60 | 25.27 | 25.21 |
| -23.03 | 25.20 | 25.14 |
| -22.47 | 25.12 | 25.06 |
| -21.90 | 25.04 | 24.96 |
| -21.33 | 24.94 | 24.87 |
| -20.76 | 24.83 | 24.76 |
| -20.20 | 24.72 | 24.64 |
| -19.63 | 24.60 | 24.51 |
| -19.06 | 24.47 | 24.38 |
| -18.50 | 24.32 | 24.23 |
| -17.93 | 24.17 | 24.08 |
| -17.36 | 24.01 | 23.91 |
| -16.79 | 23.84 | 23.74 |
| -16.23 | 23.66 | 23.56 |
| -15.66 | 23.47 | 23.36 |
| -15.09 | 23.27 | 23.16 |
| -14.53 | 23.07 | 22.95 |
| -13.96 | 22.86 | 22.75 |
| -13.39 | 22.66 | 22.54 |
| -12.82 | 22.46 | 22.33 |
| -12.26 | 22.25 | 22.13 |
| -11.69 | 22.05 | 21.92 |
| -11.12 | 21.85 | 21.71 |
| -10.56 | 21.64 | 21.51 |
| -9.99 | 21.44 | 21.30 |
| -9.42 | 21.23 | 21.09 |
| -8.85 | 21.03 | 20.89 |
| -8.29 | 20.83 | 20.68 |
| -7.72 | 20.62 | 20.48 |
| -7.15 | 20.42 | 20.27 |
| -6.59 | 20.21 | 20.06 |
| -6.02 | 20.02 | 19.86 |
| -5.45 | 19.84 | 19.68 |
| -4.88 | 19.68 | 19.52 |

(continued)

|  | with boundary layer correction | without boundary layer correction |
|---|---|---|
| x in mm | r in mm | r in mm |
| -4.32 | 19.54 | 19.38 |
| -3.75 | 19.41 | 19.25 |
| -3.18 | 19.31 | 19.15 |
| -2.62 | 19.22 | 19.06 |
| -2.05 | 19.15 | 18.99 |
| -1.48 | 19.10 | 18.94 |
| -0.91 | 19.07 | 18.90 |
| -0.35 | 19.05 | 18.88 |
| 0.22 | 19.05 | 18.88 |
| 0.79 | 19.06 | 18.88 |
| 1.35 | 19.07 | 18.89 |
| 1.92 | 19.09 | 18.90 |
| 2.49 | 19.11 | 18.92 |
| 3.06 | 19.13 | 18.94 |
| 3.62 | 19.16 | 18.96 |
| 4.19 | 19.19 | 18.99 |
| 4.76 | 19.23 | 19.03 |
| 5.32 | 19.27 | 19.06 |
| 5.89 | 19.32 | 19.11 |
| 6.46 | 19.37 | 19.15 |
| 7.03 | 19.42 | 19.20 |
| 7.59 | 19.48 | 19.26 |
| 8.16 | 19.54 | 19.32 |
| 8.73 | 19.61 | 19.38 |
| 9.29 | 19.68 | 19.45 |
| 9.86 | 19.76 | 19.52 |
| 10.43 | 19.84 | 19.60 |
| 11.00 | 19.82 | 19.68 |
| 11.56 | 20.01 | 19.76 |
| 12.13 | 20.10 | 19.85 |
| 12.70 | 20.20 | 19.94 |
| 13.26 | 20.29 | 20.03 |
| 13.83 | 20.39 | 20.12 |
| 14.40 | 20.48 | 20.22 |
| 14.97 | 20.58 | 20.31 |
| 15.53 | 20.68 | 20.41 |
| 16.10 | 20.78 | 20.50 |

(continued)

|  | with boundary layer correction | without boundary layer correction |
|---|---|---|
| x in mm | r in mm | r in mm |
| 16.67 | 20.88 | 20.60 |
| 17.23 | 20.98 | 20.69 |
| 17.80 | 21.08 | 20.79 |
| 18.37 | 21.18 | 20.89 |
| 18.94 | 21.28 | 20.98 |
| 19.50 | 21.38 | 21.08 |
| 20.07 | 21.48 | 21.18 |
| 20.64 | 21.58 | 21.27 |
| 21.21 | 21.68 | 21.37 |
| 21.77 | 21.78 | 21.47 |
| 22.34 | 21.88 | 21.56 |
| 22.91 | 21.97 | 21.66 |
| 23.47 | 22.07 | 21.75 |
| 24.04 | 22.17 | 21.85 |
| 24.61 | 22.27 | 21.94 |
| 25.18 | 22.37 | 22.03 |
| 25.74 | 22.46 | 22.13 |
| 26.31 | 22.56 | 22.22 |
| 26.88 | 22.65 | 22.31 |
| 27.44 | 22.75 | 22.40 |
| 28.01 | 22.84 | 22.50 |
| 28.58 | 22.94 | 22.59 |
| 29.15 | 23.03 | 22.68 |
| 29.71 | 23.12 | 22.77 |
| 30.28 | 23.21 | 22.85 |
| 30.85 | 23.31 | 22.94 |
| 31.41 | 23.40 | 23.03 |
| 31.98 | 23.49 | 23.12 |
| 32.55 | 23.58 | 23.20 |
| 33.12 | 23.68 | 23.29 |
| 33.68 | 23.75 | 23.37 |
| 34.28 | 23.84 | 23.45 |
| 34.82 | 23.92 | 23.54 |
| 35.38 | 24.01 | 23.62 |
| 35.95 | 24.09 | 23.70 |
| 36.52 | 24.18 | 23.78 |
| 37.09 | 24.26 | 23.86 |

(continued)

|  | with boundary layer correction | without boundary layer correction |
|---|---|---|
| x in mm | r in mm | r in mm |
| 37.65 | 24.34 | 23.94 |
| 38.22 | 24.42 | 24.02 |
| 38.79 | 24.51 | 24.09 |
| 39.35 | 24.58 | 24.17 |
| 39.92 | 24.68 | 24.25 |
| 40.49 | 24.74 | 24.32 |
| 41.06 | 24.82 | 24.40 |
| 41.62 | 24.90 | 24.47 |
| 42.19 | 24.97 | 24.54 |
| 42.76 | 25.05 | 24.61 |
| 43.32 | 25.12 | 24.68 |
| 43.69 | 25.19 | 24.75 |
| 44.46 | 25.26 | 24.82 |
| 45.03 | 25.34 | 24.89 |
| 45.59 | 25.41 | 24.96 |
| 46.16 | 25.48 | 25.02 |
| 46.73 | 25.55 | 25.09 |
| 47.29 | 25.61 | 25.15 |
| 47.86 | 25.68 | 25.22 |
| 48.43 | 25.75 | 25.28 |
| 49.00 | 25.81 | 25.34 |
| 49.56 | 25.88 | 25.40 |
| 50.13 | 25.94 | 25.46 |
| 50.70 | 26.00 | 25.52 |
| 51.26 | 26.07 | 25.58 |
| 51.83 | 26.13 | 25.64 |
| 52.40 | 26.19 | 25.70 |
| 52.97 | 26.25 | 25.75 |
| 53.53 | 26.30 | 25.81 |
| 54.10 | 26.36 | 25.86 |
| 54.67 | 26.42 | 25.92 |
| 55.23 | 26.48 | 25.97 |
| 55.80 | 26.53 | 26.02 |
| 56.37 | 26.59 | 26.07 |
| 56.94 | 26.64 | 26.12 |
| 57.50 | 26.69 | 26.17 |
| 58.07 | 26.74 | 26.22 |

(continued)

|  | with boundary layer correction | without boundary layer correction |
|---|---|---|
| x in mm | r in mm | r in mm |
| 58.64 | 26.80 | 26.27 |
| 59.20 | 26.85 | 26.32 |
| 59.77 | 26.90 | 26.36 |
| 60.34 | 26.94 | 26.41 |
| 60.91 | 26.99 | 26.46 |
| 61.47 | 27.04 | 26.50 |
| 62.04 | 27.09 | 26.54 |
| 62.61 | 27.13 | 26.58 |
| 63.18 | 27.18 | 26.83 |
| 63.74 | 27.22 | 26.67 |
| 64.31 | 27.26 | 26.71 |
| 64.88 | 27.31 | 26.75 |
| 65.44 | 27.35 | 26.78 |
| 66.01 | 27.39 | 26.82 |
| 66.58 | 27.43 | 26.86 |
| 67.15 | 27.47 | 26.90 |
| 67.71 | 27.51 | 26.93 |
| 68.28 | 27.55 | 26.97 |
| 68.85 | 27.58 | 27.00 |
| 69.41 | 27.62 | 27.03 |
| 69.98 | 27.66 | 27.07 |
| 70.55 | 27.69 | 27.10 |
| 71.12 | 27.73 | 27.13 |
| 71.68 | 27.76 | 27.16 |
| 72.25 | 27.79 | 27.19 |
| 72.82 | 27.82 | 27.22 |
| 73.38 | 27.86 | 27.25 |
| 73.95 | 27.89 | 27.27 |
| 74.52 | 27.92 | 27.30 |
| 75.09 | 27.95 | 27.33 |
| 75.65 | 27.97 | 27.35 |
| 76.22 | 28.00 | 27.38 |
| 76.79 | 28.03 | 27.40 |
| 77.35 | 28.06 | 27.43 |
| 77.92 | 28.08 | 27.45 |
| 78.49 | 28.11 | 27.47 |
| 79.08 | 28.13 | 27.49 |

(continued)

|  | with boundary layer correction | without boundary layer correction |
|---|---|---|
| x in mm | r in mm | r in mm |
| 79.62 | 28.16 | 27.51 |
| 80.19 | 28.18 | 27.53 |
| 80.76 | 28.20 | 27.55 |
| 81.32 | 28.23 | 27.57 |
| 81.89 | 28.25 | 27.59 |
| 82.46 | 28.27 | 27.61 |
| 83.03 | 28.29 | 27.63 |
| 83.59 | 28.31 | 27.64 |
| 84.16 | 28.33 | 27.66 |
| 84.73 | 28.35 | 27.68 |
| 85.29 | 28.37 | 27.69 |
| 85.86 | 28.38 | 27.70 |
| 86.43 | 28.40 | 27.72 |
| 87.00 | 28.42 | 27.73 |
| 87.56 | 28.43 | 27.74 |
| 88.13 | 28.45 | 27.76 |
| 88.70 | 28.46 | 27.77 |
| 89.26 | 28.48 | 27.78 |
| 89.83 | 28.49 | 27.79 |
| 90.40 | 28.50 | 27.80 |
| 90.97 | 28.52 | 27.81 |
| 91.53 | 28.53 | 27.82 |
| 92.10 | 28.54 | 27.83 |
| 92.67 | 28.55 | 27.84 |
| 93.23 | 28.56 | 27.84 |
| 93.80 | 28.57 | 27.85 |
| 94.37 | 28.58 | 27.86 |
| 94.94 | 28.59 | 27.86 |
| 95.50 | 28.60 | 27.87 |
| 96.07 | 28.61 | 27.88 |
| 96.64 | 28.62 | 27.88 |
| 97.20 | 28.62 | 27.89 |
| 97.77 | 28.63 | 27.89 |
| 98.34 | 28.64 | 27.89 |
| 98.91 | 28.64 | 27.90 |
| 99.47 | 28.65 | 27.90 |
| 100.04 | 28.66 | 27.90 |

(continued)

|  | with boundary layer correction | without boundary layer correction |
|---|---|---|
| x in mm | r in mm | r in mm |
| 100.61 | 28.66 | 27.91 |
| 101.17 | 28.67 | 27.91 |
| 101.74 | 28.67 | 27.91 |
| 102.31 | 28.67 | 27.91 |
| 102.88 | 28.68 | 27.91 |
| 103.44 | 28.68 | 27.91 |
| 104.01 | 28.69 | 27.91 |
| 104.58 | 28.69 | 27.92 |
| 105.14 | 28.69 | 27.92 |
| 105.71 | 28.69 | 27.92 |

## Revendications

1. Tuyère supersonique pour son utilisation dans des installations métallurgiques pour l'insufflation d'un gaz dans un convertisseur à l'oxygène (BOF), dans un convertisseur à décarburation à l'argon-oxygène (AOD)' ou dans un four électrique à arc (EAF), comprenant une section convergente et une section divergente qui sont réciproquement adjacentes contre une gorge de tuyère (DK), **caractérisée en ce que** le contour interne de la tuyère supersonique correspond au contour déterminé par voie numérique avec un procédé caractéristique modifié et la tuyère supersonique est définie par la série suivante de formes de tuyères dans leur cas de conception respectif :

| Pression $P_0$ en bar | Courant volumique $V_0$ en Nm$^3$/min | Rayon dans la section transversale la plus étroite r* en mm | Rayon de sortie $r_c$ en mm | Longueur de tuyère maximale l en mm |
|---|---|---|---|---|
| 4 | 20 | 12,0 | 14,0 | 50 ± 20 |
| 4 | 200 | 39 | 44,0 | 16 ± 20 |
| 14 | 20 | 6 | 10,0 | 50 ± 20 |
| 14 | 200 | 21 | 33,0 | 160 ± 20 |

le rapport de la longueur de tuyère l au rayon dans la section transversale la plus étroite r*, c'est-à-dire le rapport l/r*, se situant entre 2,1 et 11,6, de préférence entre 2,1 et 8,3, de manière encore plus préférée entre 2,1 et 5,4, de manière encore plus préférée entre 2,1 et 5,0, et présentant en particulier des valeurs de 11,6, 8,3, 5,4, 5,0, 4,8, 4,2, 4,1, 3,6, 3,3, 3,1 ou 2,1.

2. Tuyère supersonique pour son utilisation dans des installations métallurgiques pour l'insufflation d'oxygène dans un convertisseur à l'oxygène (BOF), dans un convertisseur à décarburation à l'argon-oxygène (AOD) ou dans un four électrique à arc (EAF), comprenant une section convergente et une section divergente qui sont réciproquement adjacentes contre une gorge de tuyère (DK), **caractérisée en ce que** le contour interne de la tuyère supersonique correspond au contour déterminé par voie numérique avec un procédé caractéristique modifié, dans laquelle le rapport de la longueur de tuyère l au rayon dans la section transversale la plus étroite r*, c'est-à-dire le rapport l/r*, se situe entre 2,1 et 11,6, de préférence entre 2,1 et 8,3, de manière encore plus préférée entre 2,1 et 5,4, de manière encore plus préférée entre 2,1 et 5,0, et présente en particulier des valeurs de 11,6, 8,3, 5,4, 5,0, 4,8, 4,2, 4,1, 3,6, 3,3, 3,1 ou 2,1.

3. Tuyère supersonique selon la revendication 2, dans laquelle le contour interne de la tuyère supersonique correspond au contour déterminé, que l'on détermine par résolution numérique des équations différentielles partielles de la dynamique des gaz, dans lesquelles le courant de gaz symétrique en rotation, isentropique, stationnaire est représenté au moyen d'équations caractéristiques discrétisées dans l'espace en prenant en compte des conditions de compatibilité correspondantes.

4. Tuyère supersonique selon la revendication 3, dans laquelle, lors de la résolution des équations différentielles numériques partielles, on prend en compte l'influence d'une couche limite proche de la paroi, entachée de friction.

5. Tuyère supersonique selon l'une quelconque des revendications précédentes, dans laquelle la section convergente présente un contour en forme de cloche et la section divergente présente un contour en forme de cloche, les contours en forme de cloche de la section convergente et de la section divergente se confondant l'une dans l'autre en continu à la gorge de la tuyère.

6. Tuyère supersonique selon l'une quelconque des revendications précédentes, dans laquelle la tuyère supersonique présente des canaux de refroidissement.

7. Tuyère supersonique selon l'une quelconque des revendications précédentes, dans laquelle le contour interne de la section divergente de la tuyère supersonique ne peut pas être représenté par une fonction mathématique univoque.

8. Procédé pour la détermination des dimensions d'une tuyère supersonique selon l'une quelconque des revendications précédentes, le procédé comprenant le fait de :

   déterminer un contour par voie numérique avec un procédé caractéristique modifié et élaborer le contour interne de la tuyère supersonique en se basant sur le contour déterminé, le rapport de la longueur de tuyère l au rayon dans la section transversale la plus étroite r*, c'est-à-dire le rapport l/r*, se situant entre 2,1 et 11,6, de préférence entre 2,1 et 8,3, de manière encore plus préférée entre 2,1 et 5,4, de manière encore plus préférée entre 2,1 et 5,0, et présentant en particulier des valeurs de 11,6, 8,3, 5,4, 5,0, 4,8, 4,2, 4,1, 3,6, 3,3, 3,1 ou 2,1.

9. Procédé selon la revendication 8, dans lequel le contour est déterminé par résolution numérique des équations différentielles partielles de la dynamique des gaz, dans lesquelles le courant de gaz symétrique en rotation, isentropique, stationnaire est représenté au moyen d'équations caractéristiques discrétisées dans l'espace en prenant en compte des conditions de compatibilité correspondantes.

10. Procédé selon la revendication 9, dans lequel, la résolution des équations différentielles numériques partielles est corrigée pour prendre en compte l'influence d'une couche limite proche de la paroi, entachée de friction.

11. Tuyère supersonique pour son utilisation dans des installations métallurgiques pour l'insufflation d'un gaz dans un convertisseur à l'oxygène (BOF), dans un convertisseur à décarburation à l'argon-oxygène (AOD) ou dans un four électrique à arc (EAF), **caractérisée en ce que** le contour interne de la tuyère supersonique correspond au contour déterminé par voie numérique avec un procédé caractéristique modifié et présente le contour interne dimensionné par la suite dans le cas de conception suivant :

| | | |
|---|---|---|
| Pression d'entrée $p_0$ = 10 bar<br>Courant volumique d'entrée $V_0$ = 50 Nm³/min<br>Pression ambiante $p_u$ =1,013 bar | | |
| | Avec la correction qui prend en compte la couche limite | Sans la correction qui prend en compte la couche limite |
| x en mm | r en mm | r en mm |
| -17.32 | 16.68 | 16.66 |
| -16.77 | 16.66 | 16.63 |
| -16.22 | 16.62 | 16.59 |
| -15.67 | 16.57 | 16.53 |

(suite)

| x en mm | Avec la correction qui prend en compte la couche limite | Sans la correction qui prend en compte la couche limite |
|---|---|---|
| | r en mm | r en mm |
| -15.12 | 16.51 | 16.46 |
| -14.57 | 16.43 | 16.38 |
| -14.03 | 16.34 | 16.29 |
| -13.48 | 16.24 | 16.18 |
| -12.93 | 16.13 | 16.06 |
| -12.38 | 16.00 | 15.93 |
| -11.83 | 15.86 | 15.79 |
| -11.28 | 15.70 | 15.63 |
| -10.73 | 15.54 | 15.46 |
| -10.18 | 15.35 | 15.27 |
| -9.63 | 15.16 | 15.07 |
| -9.08 | 14.96 | 14.87 |
| -8.53 | 14.76 | 14.67 |
| -7.98 | 14.57 | 14.47 |
| -7.43 | 14.37 | 14.27 |
| -6.88 | 14.17 | 14.07 |
| -6.33 | 13.98 | 13.87 |
| -5.78 | 13.78 | 13.67 |
| -5.23 | 13.58 | 13.47 |
| -4.69 | 13.38 | 13.27 |
| -4.14 | 13.19 | 13.07 |
| -3.59 | 13.01 | 12.89 |
| -3.04 | 12.86 | 12.74 |
| -2.49 | 12.73 | 12.61 |
| -1.94 | 12.64 | 12.51 |
| -1.39 | 12.56 | 12.44 |
| -0.84 | 12.52 | 12.39 |
| -0.29 | 12.49 | 12.36 |
| 0.26 | 12.49 | 12.36 |
| 0.81 | 12.50 | 12.36 |
| 1.36 | 12.52 | 12.38 |
| 1.91 | 12.54 | 12.39 |
| 2.46 | 12.57 | 12.42 |
| 3.01 | 12.60 | 12.45 |
| 3.56 | 12.64 | 12.49 |
| 4.11 | 12.69 | 12.53 |

(suite)

| x en mm | Avec la correction qui prend en compte la couche limite | Sans la correction qui prend en compte la couche limite |
|---------|---------|---------|
| | r en mm | r en mm |
| 4.65 | 12.74 | 12.58 |
| 5.20 | 12.80 | 12.63 |
| 5.75 | 12.87 | 12.69 |
| 6.30 | 12.94 | 12.76 |
| 6.85 | 13.02 | 12.83 |
| 7.40 | 13.10 | 12.91 |
| 7.95 | 13.18 | 12.99 |
| 8.50 | 13.27 | 13.07 |
| 9.05 | 13.36 | 13.16 |
| 9.60 | 13.44 | 13.24 |
| 10.15 | 13.53 | 13.32 |
| 10.70 | 13.62 | 13.41 |
| 11.25 | 13.71 | 13.49 |
| 11.80 | 13.80 | 13.58 |
| 12.35 | 13.89 | 13.67 |
| 12.90 | 13.98 | 13.75 |
| 13.45 | 14.07 | 13.84 |
| 13.99 | 14.16 | 13.92 |
| 14.54 | 14.24 | 14.00 |
| 15.09 | 14.33 | 14.09 |
| 15.64 | 14.42 | 14.17 |
| 16.19 | 14.50 | 14.25 |
| 16.74 | 14.59 | 14.33 |
| 17.29 | 14.67 | 14.41 |
| 17.84 | 14.76 | 14.49 |
| 18.39 | 14.84 | 14.57 |
| 18.94 | 14.92 | 14.65 |
| 19.49 | 15.00 | 14.73 |
| 20.04 | 15.08 | 14.80 |
| 20.59 | 15.16 | 14.88 |
| 21.14 | 15.23 | 14.95 |
| 21.69 | 15.31 | 15.02 |
| 22.24 | 15.39 | 15.10 |
| 22.78 | 15.46 | 15.17 |
| 23.33 | 15.53 | 15.24 |
| 23.88 | 15.60 | 15.30 |

(suite)

| | Avec la correction qui prend en compte la couche limite | Sans la correction qui prend en compte la couche limite |
|---|---|---|
| x en mm | r en mm | r en mm |
| 24.43 | 15.67 | 15.37 |
| 24.98 | 15.74 | 15.44 |
| 25.53 | 15.81 | 15.50 |
| 26.08 | 15.88 | 15.56 |
| 26.63 | 15.94 | 15.62 |
| 27.18 | 16.01 | 15.69 |
| 27.73 | 16.07 | 15.74 |
| 28.28 | 16.13 | 15.80 |
| 28.83 | 16.19 | 15.86 |
| 29.38 | 16.25 | 15.92 |
| 29.83 | 16.31 | 15.97 |
| 30.48 | 16.37 | 16.02 |
| 31.03 | 16.42 | 16.08 |
| 31.58 | 16.48 | 16.13 |
| 32.12 | 16.53 | 16.18 |
| 32.67 | 16.58 | 16.22 |
| 33.22 | 16.63 | 16.27 |
| 33.77 | 16.68 | 16.32 |
| 34.32 | 16.73 | 16.36 |
| 34.87 | 16.78 | 16.41 |
| 35.42 | 16.82 | 16.45 |
| 35.97 | 16.87 | 16.49 |
| 36.52 | 16.91 | 16.53 |
| 37.07 | 16.96 | 16.57 |
| 37.62 | 17.00 | 16.60 |
| 38.17 | 17.04 | 16.64 |
| 38.72 | 17.08 | 16.68 |
| 39.27 | 17.11 | 16.71 |
| 39.82 | 17.15 | 16.74 |
| 40.37 | 17.18 | 16.78 |
| 40.92 | 17.22 | 16.81 |
| 41.46 | 17.25 | 16.84 |
| 42.01 | 17.28 | 16.86 |
| 42.56 | 17.32 | 16.89 |
| 43.11 | 17.34 | 16.92 |
| 43.66 | 17.37 | 16.94 |

(suite)

| | Avec la correction qui prend en compte la couche limite | Sans la correction qui prend en compte la couche limite |
|---|---|---|
| x en mm | r en mm | r en mm |
| 44.21 | 17.40 | 16.97 |
| 44.78 | 17.43 | 16.99 |
| 45.31 | 17.45 | 17.01 |
| 45.88 | 17.48 | 17.03 |
| 46.41 | 17.50 | 17.05 |
| 46.98 | 17.53 | 17.07 |
| 47.51 | 17.55 | 17.09 |
| 48.06 | 17.57 | 17.11 |
| 48.61 | 17.58 | 17.13 |
| 49.18 | 17.61 | 17.14 |
| 49.71 | 17.62 | 17.16 |
| 50.26 | 17.64 | 17.17 |
| 50.80 | 17.66 | 17.18 |
| 51.35 | 17.67 | 17.19 |
| 51.90 | 17.69 | 17.21 |
| 52.45 | 17.70 | 17.22 |
| 53.00 | 17.71 | 17.23 |
| 53.55 | 17.73 | 17.23 |
| 54.10 | 17.74 | 17.24 |
| 54.65 | 17.75 | 17.25 |
| 55.20 | 17.76 | 17.26 |
| 55.75 | 17.77 | 17.26 |
| 56.30 | 17.78 | 17.27 |
| 56.85 | 17.78 | 17.27 |
| 57.40 | 17.79 | 17.28 |
| 57.95 | 17.80 | 17.28 |
| 58.50 | 17.80 | 17.28 |
| 59.05 | 17.81 | 17.29 |
| 59.60 | 17.81 | 17.29 |
| 60.14 | 17.82 | 17.29 |
| 60.69 | 17.82 | 17.29 |
| 61.24 | 17.83 | 17.29 |
| 61.79 | 17.83 | 17.29 |

12. Tuyère supersonique pour son utilisation dans des installations métallurgiques pour l'insufflation d'un gaz dans un convertisseur à l'oxygène (BOF), dans un convertisseur à décarburation à l'argon-oxygène (AOD) ou dans un four électrique à arc (EAF), **caractérisée en ce que** le contour interne de la tuyère supersonique correspond au contour déterminé par voie numérique avec un procédé caractéristique modifié et présente le contour interne dimensionné par la suite dans le cas de conception suivant :

| | | |
|---|---|---|
| Pression d'entrée $p_0$ = 12 bar<br>Courant volumique d'entrée $V_0$ = 140 Nm$^3$/min<br>Pression ambiante $p_u$ = 1,013 bar | | |
| | Avec la correction qui prend en compte la couche limite | Sans la correction qui prend en compte la couche limite |
| x en mm | r en mm | r en mm |
| -27.00 | 25.49 | 25.47 |
| -26.44 | 25.48 | 25.45 |
| -25.87 | 25.45 | 25.42 |
| -25.30 | 25.42 | 25.38 |
| -24.74 | 25.38 | 25.33 |
| -24.17 | 25.33 | 25.27 |
| -23.60 | 25.27 | 25.21 |
| -23.03 | 25.20 | 25.14 |
| -22.47 | 25.12 | 25.06 |
| -21.90 | 25.04 | 24.96 |
| -21.33 | 24.94 | 24.87 |
| -20.76 | 24.83 | 24.76 |
| -20.20 | 24.72 | 24.64 |
| -19.63 | 24.60 | 24.51 |
| -19.06 | 24.47 | 24.38 |
| -18.50 | 24.32 | 24.23 |
| -17.93 | 24.17 | 24.08 |
| -17.36 | 24.01 | 23.91 |
| -16.79 | 23.84 | 23.74 |
| -16.23 | 23.66 | 23.56 |
| -15.66 | 23.47 | 23.36 |
| -15.09 | 23.27 | 23.16 |
| -14.53 | 23.07 | 22.95 |
| -13.96 | 22.86 | 22.75 |
| -13.39 | 22.66 | 22.54 |
| -12.82 | 22.46 | 22.33 |
| -12.26 | 22.25 | 22.13 |
| -11.69 | 22.05 | 21.92 |
| -11.12 | 21.85 | 21.71 |
| -10.56 | 21.64 | 21.51 |
| -9.99 | 21.44 | 21.30 |

(suite)

| x en mm | Avec la correction qui prend en compte la couche limite | Sans la correction qui prend en compte la couche limite |
|---|---|---|
| | r en mm | r en mm |
| -9.42 | 21.23 | 21.09 |
| -8.85 | 21.03 | 20.89 |
| -8.29 | 20.83 | 20.68 |
| -7.72 | 20.62 | 20.48 |
| -7.15 | 20.42 | 20.27 |
| -6.59 | 20.21 | 20.06 |
| -6.02 | 20.02 | 19.86 |
| -5.45 | 19.84 | 19.68 |
| -4.88 | 19.68 | 19.52 |
| -4.32 | 19.54 | 19.38 |
| -3.75 | 19.41 | 19.25 |
| -3.18 | 19.31 | 19.15 |
| -2.62 | 19.22 | 19.06 |
| -2.05 | 19.15 | 18.99 |
| -1.48 | 19.10 | 18.94 |
| -0.91 | 19.07 | 18.90 |
| -0.35 | 19.05 | 18.88 |
| 0.22 | 19.05 | 18.88 |
| 0.79 | 19.06 | 18.88 |
| 1.35 | 19.07 | 18.89 |
| 1.92 | 19.09 | 18.90 |
| 2.49 | 19.11 | 18.92 |
| 3.06 | 19.13 | 18.94 |
| 3.62 | 19.16 | 18.96 |
| 4.19 | 19.19 | 18.99 |
| 4.76 | 19.23 | 19.03 |
| 5.32 | 19.27 | 19.06 |
| 5.89 | 19.32 | 19.11 |
| 6.46 | 19.37 | 19.15 |
| 7.03 | 19.42 | 19.20 |
| 7.59 | 19.48 | 19.26 |
| 8.16 | 19.54 | 19.32 |
| 8.73 | 19.61 | 19.38 |
| 9.29 | 19.68 | 19.45 |
| 9.86 | 19.76 | 19.52 |
| 10.43 | 19.84 | 19.60 |

(suite)

| x en mm | Avec la correction qui prend en compte la couche limite | Sans la correction qui prend en compte la couche limite |
|---------|---------|---------|
|         | r en mm | r en mm |
| 11.00   | 19.82   | 19.68   |
| 11.56   | 20.01   | 19.76   |
| 12.13   | 20.10   | 19.85   |
| 12.70   | 20.20   | 19.94   |
| 13.26   | 20.29   | 20.03   |
| 13.83   | 20.39   | 20.12   |
| 14.40   | 20.48   | 20.22   |
| 14.97   | 20.58   | 20.31   |
| 15.53   | 20.68   | 20.41   |
| 16.10   | 20.78   | 20.50   |
| 16.67   | 20.88   | 20.60   |
| 17.23   | 20.98   | 20.69   |
| 17.80   | 21.08   | 20.79   |
| 18.37   | 21.18   | 20.89   |
| 18.94   | 21.28   | 20.98   |
| 19.50   | 21.38   | 21.08   |
| 20.07   | 21.48   | 21.18   |
| 20.64   | 21.58   | 21.27   |
| 21.21   | 21.68   | 21.37   |
| 21.77   | 21.78   | 21.47   |
| 22.34   | 21.88   | 21.56   |
| 22.91   | 21.97   | 21.66   |
| 23.47   | 22.07   | 21.75   |
| 24.04   | 22.17   | 21.85   |
| 24.61   | 22.27   | 21.94   |
| 25.18   | 22.37   | 22.03   |
| 25.74   | 22.46   | 22.13   |
| 26.31   | 22.56   | 22.22   |
| 26.88   | 22.65   | 22.31   |
| 27.44   | 22.75   | 22.40   |
| 28.01   | 22.84   | 22.50   |
| 28.58   | 22.94   | 22.59   |
| 29.15   | 23.03   | 22.68   |
| 29.71   | 23.12   | 22.77   |
| 30.28   | 23.21   | 22.85   |
| 30.85   | 23.31   | 22.94   |

(suite)

| | Avec la correction qui prend en compte la couche limite | | Sans la correction qui prend en compte la couche limite |
|---|---|---|---|
| x en mm | r en mm | | r en mm |
| 31.41 | 23.40 | | 23.03 |
| 31.98 | 23.49 | | 23.12 |
| 32.55 | 23.58 | | 23.20 |
| 33.12 | 23.68 | | 23.29 |
| 33.68 | 23.75 | | 23.37 |
| 34.28 | 23.84 | | 23.45 |
| 34.82 | 23.92 | | 23.54 |
| 35.38 | 24.01 | | 23.62 |
| 35.95 | 24.09 | | 23.70 |
| 36.52 | 24.18 | | 23.78 |
| 37.09 | 24.26 | | 23.86 |
| 37.65 | 24.34 | | 23.94 |
| 38.22 | 24.42 | | 24.02 |
| 38.79 | 24.51 | | 24.09 |
| 39.35 | 24.58 | | 24.17 |
| 39.92 | 24.68 | | 24.25 |
| 40.49 | 24.74 | | 24.32 |
| 41.06 | 24.82 | | 24.40 |
| 41.62 | 24.90 | | 24.47 |
| 42.19 | 24.97 | | 24.54 |
| 42.76 | 25.05 | | 24.61 |
| 43.32 | 25.12 | | 24.68 |
| 43.69 | 25.19 | | 24.75 |
| 44.46 | 25.26 | | 24.82 |
| 45.03 | 25.34 | | 24.89 |
| 45.59 | 25.41 | | 24.96 |
| 46.16 | 25.48 | | 25.02 |
| 46.73 | 25.55 | | 25.09 |
| 47.29 | 25.61 | | 25.15 |
| 47.86 | 25.68 | | 25.22 |
| 48.43 | 25.75 | | 25.28 |
| 49.00 | 25.81 | | 25.34 |
| 49.56 | 25.88 | | 25.40 |
| 50.13 | 25.94 | | 25.46 |
| 50.70 | 26.00 | | 25.52 |
| 51.26 | 26.07 | | 25.58 |

(suite)

| x en mm | Avec la correction qui prend en compte la couche limite | Sans la correction qui prend en compte la couche limite |
| --- | --- | --- |
| | r en mm | r en mm |
| 51.83 | 26.13 | 25.64 |
| 52.40 | 26.19 | 25.70 |
| 52.97 | 26.25 | 25.75 |
| 53.53 | 26.30 | 25.81 |
| 54.10 | 26.36 | 25.86 |
| 54.67 | 26.42 | 25.92 |
| 55.23 | 26.48 | 25.97 |
| 55.80 | 26.53 | 26.02 |
| 56.37 | 26.59 | 26.07 |
| 56.94 | 26.64 | 26.12 |
| 57.50 | 26.69 | 26.17 |
| 58.07 | 26.74 | 26.22 |
| 58.64 | 26.80 | 26.27 |
| 59.20 | 26.85 | 26.32 |
| 59.77 | 26.90 | 26.36 |
| 60.34 | 26.94 | 26.41 |
| 60.91 | 26.99 | 26.46 |
| 61.47 | 27.04 | 26.50 |
| 62.04 | 27.09 | 26.54 |
| 62.61 | 27.13 | 26.58 |
| 63.18 | 27.18 | 26.83 |
| 63.74 | 27.22 | 26.67 |
| 64.31 | 27.26 | 26.71 |
| 64.88 | 27.31 | 26.75 |
| 65.44 | 27.35 | 26.78 |
| 66.01 | 27.39 | 26.82 |
| 66.58 | 27.43 | 26.86 |
| 67.15 | 27.47 | 26.90 |
| 67.71 | 27.51 | 26.93 |
| 68.28 | 27.55 | 26.97 |
| 68.85 | 27.58 | 27.00 |
| 69.41 | 27.62 | 27.03 |
| 69.98 | 27.66 | 27.07 |
| 70.55 | 27.69 | 27.10 |
| 71.12 | 27.73 | 27.13 |
| 71.68 | 27.76 | 27.16 |

(suite)

|  | Avec la correction qui prend en compte la couche limite | Sans la correction qui prend en compte la couche limite |
|---|---|---|
| x en mm | r en mm | r en mm |
| 72.25 | 27.79 | 27.19 |
| 72.82 | 27.82 | 27.22 |
| 73.38 | 27.86 | 27.25 |
| 73.95 | 27.89 | 27.27 |
| 74.52 | 27.92 | 27.30 |
| 75.09 | 27.95 | 27.33 |
| 75.65 | 27.97 | 27.35 |
| 76.22 | 28.00 | 27.38 |
| 76.79 | 28.03 | 27.40 |
| 77.35 | 28.06 | 27.43 |
| 77.92 | 28.08 | 27.45 |
| 78.49 | 28.11 | 27.47 |
| 79.08 | 28.13 | 27.49 |
| 79.62 | 28.16 | 27.51 |
| 80.19 | 28.18 | 27.53 |
| 80.76 | 28.20 | 27.55 |
| 81.32 | 28.23 | 27.57 |
| 81.89 | 28.25 | 27.59 |
| 82.46 | 28.27 | 27.61 |
| 83.03 | 28.29 | 27.63 |
| 83.59 | 28.31 | 27.64 |
| 84.16 | 28.33 | 27.66 |
| 84.73 | 28.35 | 27.68 |
| 85.29 | 28.37 | 27.69 |
| 85.86 | 28.38 | 27.70 |
| 86.43 | 28.40 | 27.72 |
| 87.00 | 28.42 | 27.73 |
| 87.56 | 28.43 | 27.74 |
| 88.13 | 28.45 | 27.76 |
| 88.70 | 28.46 | 27.77 |
| 89.26 | 28.48 | 27.78 |
| 89.83 | 28.49 | 27.79 |
| 90.40 | 28.50 | 27.80 |
| 90.97 | 28.52 | 27.81 |
| 91.53 | 28.53 | 27.82 |
| 92.10 | 28.54 | 27.83 |

(suite)

| | Avec la correction qui prend en compte la couche limite | Sans la correction qui prend en compte la couche limite |
|---|---|---|
| x en mm | r en mm | r en mm |
| 92.67 | 28.55 | 27.84 |
| 93.23 | 28.56 | 27.84 |
| 93.80 | 28.57 | 27.85 |
| 94.37 | 28.58 | 27.86 |
| 94.94 | 28.59 | 27.86 |
| 95.50 | 28.60 | 27.87 |
| 96.07 | 28.61 | 27.88 |
| 96.64 | 28.62 | 27.88 |
| 97.20 | 28.62 | 27.89 |
| 97.77 | 28.63 | 27.89 |
| 98.34 | 28.64 | 27.89 |
| 98.91 | 28.64 | 27.90 |
| 99.47 | 28.65 | 27.90 |
| 100.04 | 28.66 | 27.90 |
| 100.61 | 28.66 | 27.91 |
| 101.17 | 28.67 | 27.91 |
| 101.74 | 28.67 | 27.91 |
| 102.31 | 28.67 | 27.91 |
| 102.88 | 28.68 | 27.91 |
| 103.44 | 28.68 | 27.91 |
| 104.01 | 28.69 | 27.91 |
| 104.58 | 28.69 | 27.92 |
| 105.14 | 28.69 | 27.92 |
| 105.71 | 28.69 | 27.92 |

# Figur 1

Ma

0  1  2  3  4  5

**a) Auslegungszustand**

$p_e = p_u$    $p_e = 1.2$ bar

$p^*$

$P_0$

Düsen-hals    Austritt

Kessel

**Isentrope Stromfadentheorie**

$$\frac{p^*}{p_0} = 0.528, \quad \frac{T^*}{T_0} = 0.833,\ldots$$

**b) Unterexpansion**

$p_e > p_u$    $p_e = 0.6$ bar

expansion waves    compression waves

$p < p_u$    $p > p_u$

**c) Überexpansion**

$p_e < p_u$    $p_e = 2.0$ bar

shock waves

jet boundary

expansion waves

# Figur 2

## a) Nozzle A

Düsenkehle

Konfusor    Diffusor

Düsenachse

l

## b) Nozzle B

# Figur 3

a) Nozzle A

$p_{ex} = 1.315$ bar

u in m/s

530

442

353

265

177

88

0

Throat

Pressure disturbances

b) Nozzle B

$p_{ex} = 1.241$ bar

Undisturbed oxygen flow

-100        -50        0        50        100        150        x in mm

# Figur 4

a)   Subsonic part                Supersonic part                $\theta_{ex}$

Boundary layer

negative curvature

$p_0$
$T_0$
$\dot{V}_0$   Ma < 1   positive curvature   Ma > 1   Ma = Ma$_{ex}$

Ma = 1   $p_{ex}$   $p_a$

b)   r

$r_k$

$x_2, r_2$

$R_2$   $\beta$

$R_1$   R

$x_1, r_1$

$r_t$

$x_k$                $x_t$        X

c)

$c^+$

$\alpha$   V

$\theta$

$\alpha$

$c^-$

# Figur 5

a)

b)

# Figur 6

| Injektordüse im EAF (Figur 5a) | | | Blaslanzedüse im BOF (Figur 5b) | | |
|---|---|---|---|---|---|
| Eintrittsdruck $p_0$ = 10 bar<br><br>Eintrittsvolumenstrom $\dot{V}_0$ = 50 Nm³/min<br><br>Umgebungsdruck $p_u$ = 1.013 bar. | | | Eintrittsdruck $p_0$ = 12 bar<br><br>Eintrittsvolumenstrom $\dot{V}_0$ = 140 Nm³/min<br><br>Umgebungsdruck $p_u$ = 1.013 bar | | |
| | mit Grenzschicht-korrektur | ohne Grenzschicht-korrektur | | mit Grenzschicht-korrektur | ohne Grenzschicht-korrektur |
| x in mm | r in mm | r in mm | x in mm | r in mm | r in mm |
| -17.32 | 16.68 | 16.66 | -27.00 | 25.49 | 25.47 |
| -16.77 | 16.66 | 16.63 | -26.44 | 25.48 | 25.45 |
| -16.22 | 16.62 | 16.59 | -25.87 | 25.45 | 25.42 |
| -15.67 | 16.57 | 16.53 | -25.30 | 25.42 | 25.38 |
| -15.12 | 16.51 | 16.46 | -24.74 | 25.38 | 25.33 |
| -14.57 | 16.43 | 16.38 | -24.17 | 25.33 | 25.27 |
| -14.03 | 16.34 | 16.29 | -23.60 | 25.27 | 25.21 |
| -13.48 | 16.24 | 16.18 | -23.03 | 25.20 | 25.14 |
| -12.93 | 16.13 | 16.06 | -22.47 | 25.12 | 25.06 |
| -12.38 | 16.00 | 15.93 | -21.90 | 25.04 | 24.96 |
| -11.83 | 15.86 | 15.79 | -21.33 | 24.94 | 24.87 |
| -11.28 | 15.70 | 15.63 | -20.76 | 24.83 | 24.76 |
| -10.73 | 15.54 | 15.46 | -20.20 | 24.72 | 24.64 |
| -10.18 | 15.35 | 15.27 | -19.63 | 24.60 | 24.51 |
| -9.63 | 15.16 | 15.07 | -19.06 | 24.47 | 24.38 |
| -9.08 | 14.96 | 14.87 | -18.50 | 24.32 | 24.23 |
| -8.53 | 14.76 | 14.67 | -17.93 | 24.17 | 24.08 |
| -7.98 | 14.57 | 14.47 | -17.36 | 24.01 | 23.91 |
| -7.43 | 14.37 | 14.27 | -16.79 | 23.84 | 23.74 |
| -6.88 | 14.17 | 14.07 | -16.23 | 23.66 | 23.56 |
| -6.33 | 13.98 | 13.87 | -15.66 | 23.47 | 23.36 |
| -5.78 | 13.78 | 13.67 | -15.09 | 23.27 | 23.16 |
| -5.23 | 13.58 | 13.47 | -14.53 | 23.07 | 22.95 |
| -4.69 | 13.38 | 13.27 | -13.96 | 22.86 | 22.75 |

50

| | | | | | |
|---|---|---|---|---|---|
| -4.14 | 13.19 | 13.07 | -13.39 | 22.66 | 22.54 |
| -3.59 | 13.01 | 12.89 | -12.82 | 22.46 | 22.33 |
| -3.04 | 12.86 | 12.74 | -12.26 | 22.25 | 22.13 |
| -2.49 | 12.73 | 12.61 | -11.69 | 22.05 | 21.92 |
| -1.94 | 12.64 | 12.51 | -11.12 | 21.85 | 21.71 |
| -1.39 | 12.56 | 12.44 | -10.56 | 21.64 | 21.51 |
| -0.84 | 12.52 | 12.39 | -9.99 | 21.44 | 21.30 |
| -0.29 | 12.49 | 12.36 | -9.42 | 21.23 | 21.09 |
| 0.26 | 12.49 | 12.36 | -8.85 | 21.03 | 20.89 |
| 0.81 | 12.50 | 12.36 | -8.29 | 20.83 | 20.68 |
| 1.36 | 12.52 | 12.38 | -7.72 | 20.62 | 20.48 |
| 1.91 | 12.54 | 12.39 | -7.15 | 20.42 | 20.27 |
| 2.46 | 12.57 | 12.42 | -6.59 | 20.21 | 20.06 |
| 3.01 | 12.60 | 12.45 | -6.02 | 20.02 | 19.86 |
| 3.56 | 12.64 | 12.49 | -5.45 | 19.84 | 19.68 |
| 4.11 | 12.69 | 12.53 | -4.88 | 19.68 | 19.52 |
| 4.65 | 12.74 | 12.58 | -4.32 | 19.54 | 19.38 |
| 5.20 | 12.80 | 12.63 | -3.75 | 19.41 | 19.25 |
| 5.75 | 12.87 | 12.69 | -3.18 | 19.31 | 19.15 |
| 6.30 | 12.94 | 12.76 | -2.62 | 19.22 | 19.06 |
| 6.85 | 13.02 | 12.83 | -2.05 | 19.15 | 18.99 |
| 7.40 | 13.10 | 12.91 | -1.48 | 19.10 | 18.94 |
| 7.95 | 13.18 | 12.99 | -0.91 | 19.07 | 18.90 |
| 8.50 | 13.27 | 13.07 | -0.35 | 19.05 | 18.88 |
| 9.05 | 13.36 | 13.16 | 0.22 | 19.05 | 18.88 |
| 9.60 | 13.44 | 13.24 | 0.79 | 19.06 | 18.88 |
| 10.15 | 13.53 | 13.32 | 1.35 | 19.07 | 18.89 |
| 10.70 | 13.62 | 13.41 | 1.92 | 19.09 | 18.90 |
| 11.25 | 13.71 | 13.49 | 2.49 | 19.11 | 18.92 |
| 11.80 | 13.80 | 13.58 | 3.06 | 19.13 | 18.94 |
| 12.35 | 13.89 | 13.67 | 3.62 | 19.16 | 18.96 |
| 12.90 | 13.98 | 13.75 | 4.19 | 19.19 | 18.99 |
| 13.45 | 14.07 | 13.84 | 4.76 | 19.23 | 19.03 |
| 13.99 | 14.16 | 13.92 | 5.32 | 19.27 | 19.06 |

| | | | | | |
|---|---|---|---|---|---|
| 14.54 | 14.24 | 14.00 | 5.89 | 19.32 | 19.11 |
| 15.09 | 14.33 | 14.09 | 6.46 | 19.37 | 19.15 |
| 15.64 | 14.42 | 14.17 | 7.03 | 19.42 | 19.20 |
| 16.19 | 14.50 | 14.25 | 7.59 | 19.48 | 19.26 |
| 16.74 | 14.59 | 14.33 | 8.16 | 19.54 | 19.32 |
| 17.29 | 14.67 | 14.41 | 8.73 | 19.61 | 19.38 |
| 17.84 | 14.76 | 14.49 | 9.29 | 19.68 | 19.45 |
| 18.39 | 14.84 | 14.57 | 9.86 | 19.76 | 19.52 |
| 18.94 | 14.92 | 14.65 | 10.43 | 19.84 | 19.60 |
| 19.49 | 15.00 | 14.73 | 11.00 | 19.92 | 19.68 |
| 20.04 | 15.08 | 14.80 | 11.56 | 20.01 | 19.76 |
| 20.59 | 15.16 | 14.88 | 12.13 | 20.10 | 19.85 |
| 21.14 | 15.23 | 14.95 | 12.70 | 20.20 | 19.94 |
| 21.69 | 15.31 | 15.02 | 13.26 | 20.29 | 20.03 |
| 22.24 | 15.39 | 15.10 | 13.83 | 20.39 | 20.12 |
| 22.78 | 15.46 | 15.17 | 14.40 | 20.48 | 20.22 |
| 23.33 | 15.53 | 15.24 | 14.97 | 20.58 | 20.31 |
| 23.88 | 15.60 | 15.30 | 15.53 | 20.68 | 20.41 |
| 24.43 | 15.67 | 15.37 | 16.10 | 20.78 | 20.50 |
| 24.98 | 15.74 | 15.44 | 16.67 | 20.88 | 20.60 |
| 25.53 | 15.81 | 15.50 | 17.23 | 20.98 | 20.69 |
| 26.08 | 15.88 | 15.56 | 17.80 | 21.08 | 20.79 |
| 26.63 | 15.94 | 15.62 | 18.37 | 21.18 | 20.89 |
| 27.18 | 16.01 | 15.69 | 18.94 | 21.28 | 20.98 |
| 27.73 | 16.07 | 15.74 | 19.50 | 21.38 | 21.08 |
| 28.28 | 16.13 | 15.80 | 20.07 | 21.48 | 21.18 |
| 28.83 | 16.19 | 15.86 | 20.64 | 21.58 | 21.27 |
| 29.38 | 16.25 | 15.92 | 21.21 | 21.68 | 21.37 |
| 29.93 | 16.31 | 15.97 | 21.77 | 21.78 | 21.47 |
| 30.48 | 16.37 | 16.02 | 22.34 | 21.88 | 21.56 |
| 31.03 | 16.42 | 16.08 | 22.91 | 21.97 | 21.66 |
| 31.58 | 16.48 | 16.13 | 23.47 | 22.07 | 21.75 |
| 32.12 | 16.53 | 16.18 | 24.04 | 22.17 | 21.85 |
| 32.67 | 16.58 | 16.22 | 24.61 | 22.27 | 21.94 |

| | | | | | |
|---|---|---|---|---|---|
| 33.22 | 16.63 | 16.27 | 25.18 | 22.37 | 22.03 |
| 33.77 | 16.68 | 16.32 | 25.74 | 22.46 | 22.13 |
| 34.32 | 16.73 | 16.36 | 26.31 | 22.56 | 22.22 |
| 34.87 | 16.78 | 16.41 | 26.88 | 22.65 | 22.31 |
| 35.42 | 16.82 | 16.45 | 27.44 | 22.75 | 22.40 |
| 35.97 | 16.87 | 16.49 | 28.01 | 22.84 | 22.50 |
| 36.52 | 16.91 | 16.53 | 28.58 | 22.94 | 22.59 |
| 37.07 | 16.96 | 16.57 | 29.15 | 23.03 | 22.68 |
| 37.62 | 17.00 | 16.60 | 29.71 | 23.12 | 22.77 |
| 38.17 | 17.04 | 16.64 | 30.28 | 23.21 | 22.85 |
| 38.72 | 17.08 | 16.68 | 30.85 | 23.31 | 22.94 |
| 39.27 | 17.11 | 16.71 | 31.41 | 23.40 | 23.03 |
| 39.82 | 17.15 | 16.74 | 31.98 | 23.49 | 23.12 |
| 40.37 | 17.18 | 16.78 | 32.55 | 23.58 | 23.20 |
| 40.92 | 17.22 | 16.81 | 33.12 | 23.66 | 23.29 |
| 41.46 | 17.25 | 16.84 | 33.68 | 23.75 | 23.37 |
| 42.01 | 17.28 | 16.86 | 34.25 | 23.84 | 23.45 |
| 42.56 | 17.32 | 16.89 | 34.82 | 23.92 | 23.54 |
| 43.11 | 17.34 | 16.92 | 35.38 | 24.01 | 23.62 |
| 43.66 | 17.37 | 16.94 | 35.95 | 24.09 | 23.70 |
| 44.21 | 17.40 | 16.97 | 36.52 | 24.18 | 23.78 |
| 44.76 | 17.43 | 16.99 | 37.09 | 24.26 | 23.86 |
| 45.31 | 17.45 | 17.01 | 37.65 | 24.34 | 23.94 |
| 45.86 | 17.48 | 17.03 | 38.22 | 24.42 | 24.02 |
| 46.41 | 17.50 | 17.05 | 38.79 | 24.51 | 24.09 |
| 46.96 | 17.53 | 17.07 | 39.35 | 24.58 | 24.17 |
| 47.51 | 17.55 | 17.09 | 39.92 | 24.66 | 24.25 |
| 48.06 | 17.57 | 17.11 | 40.49 | 24.74 | 24.32 |
| 48.61 | 17.59 | 17.13 | 41.06 | 24.82 | 24.40 |
| 49.16 | 17.61 | 17.14 | 41.62 | 24.90 | 24.47 |
| 49.71 | 17.62 | 17.16 | 42.19 | 24.97 | 24.54 |
| 50.26 | 17.64 | 17.17 | 42.76 | 25.05 | 24.61 |
| 50.80 | 17.66 | 17.18 | 43.32 | 25.12 | 24.68 |
| 51.35 | 17.67 | 17.19 | 43.89 | 25.19 | 24.75 |

| | | | | | |
|---|---|---|---|---|---|
| 51.90 | 17.69 | 17.21 | 44.46 | 25.26 | 24.82 |
| 52.45 | 17.70 | 17.22 | 45.03 | 25.34 | 24.89 |
| 53.00 | 17.71 | 17.23 | 45.59 | 25.41 | 24.96 |
| 53.55 | 17.73 | 17.23 | 46.16 | 25.48 | 25.02 |
| 54.10 | 17.74 | 17.24 | 46.73 | 25.55 | 25.09 |
| 54.65 | 17.75 | 17.25 | 47.29 | 25.61 | 25.15 |
| 55.20 | 17.76 | 17.26 | 47.86 | 25.68 | 25.22 |
| 55.75 | 17.77 | 17.26 | 48.43 | 25.75 | 25.28 |
| 56.30 | 17.78 | 17.27 | 49.00 | 25.81 | 25.34 |
| 56.85 | 17.78 | 17.27 | 49.56 | 25.88 | 25.40 |
| 57.40 | 17.79 | 17.28 | 50.13 | 25.94 | 25.46 |
| 57.95 | 17.80 | 17.28 | 50.70 | 26.00 | 25.52 |
| 58.50 | 17.80 | 17.28 | 51.26 | 26.07 | 25.58 |
| 59.05 | 17.81 | 17.29 | 51.83 | 26.13 | 25.64 |
| 59.60 | 17.81 | 17.29 | 52.40 | 26.19 | 25.70 |
| 60.14 | 17.82 | 17.29 | 52.97 | 26.25 | 25.75 |
| 60.69 | 17.82 | 17.29 | 53.53 | 26.30 | 25.81 |
| 61.24 | 17.83 | 17.29 | 54.10 | 26.36 | 25.86 |
| 61.79 | 17.83 | 17.29 | 54.67 | 26.42 | 25.92 |
| | | | 55.23 | 26.48 | 25.97 |
| | | | 55.80 | 26.53 | 26.02 |
| | | | 56.37 | 26.59 | 26.07 |
| | | | 56.94 | 26.64 | 26.12 |
| | | | 57.50 | 26.69 | 26.17 |
| | | | 58.07 | 26.74 | 26.22 |
| | | | 58.64 | 26.80 | 26.27 |
| | | | 59.20 | 26.85 | 26.32 |
| | | | 59.77 | 26.90 | 26.36 |
| | | | 60.34 | 26.94 | 26.41 |
| | | | 60.91 | 26.99 | 26.45 |
| | | | 61.47 | 27.04 | 26.50 |
| | | | 62.04 | 27.09 | 26.54 |
| | | | 62.61 | 27.13 | 26.58 |
| | | | 63.18 | 27.18 | 26.63 |

|  |  |  | 63.74 | 27.22 | 26.67 |
|---|---|---|---|---|---|
|  |  |  | 64.31 | 27.26 | 26.71 |
|  |  |  | 64.88 | 27.31 | 26.75 |
|  |  |  | 65.44 | 27.35 | 26.78 |
|  |  |  | 66.01 | 27.39 | 26.82 |
|  |  |  | 66.58 | 27.43 | 26.86 |
|  |  |  | 67.15 | 27.47 | 26.90 |
|  |  |  | 67.71 | 27.51 | 26.93 |
|  |  |  | 68.28 | 27.55 | 26.97 |
|  |  |  | 68.85 | 27.58 | 27.00 |
|  |  |  | 69.41 | 27.62 | 27.03 |
|  |  |  | 69.98 | 27.66 | 27.07 |
|  |  |  | 70.55 | 27.69 | 27.10 |
|  |  |  | 71.12 | 27.73 | 27.13 |
|  |  |  | 71.68 | 27.76 | 27.16 |
|  |  |  | 72.25 | 27.79 | 27.19 |
|  |  |  | 72.82 | 27.82 | 27.22 |
|  |  |  | 73.38 | 27.86 | 27.25 |
|  |  |  | 73.95 | 27.89 | 27.27 |
|  |  |  | 74.52 | 27.92 | 27.30 |
|  |  |  | 75.09 | 27.95 | 27.33 |
|  |  |  | 75.65 | 27.97 | 27.35 |
|  |  |  | 76.22 | 28.00 | 27.38 |
|  |  |  | 76.79 | 28.03 | 27.40 |
|  |  |  | 77.35 | 28.06 | 27.43 |
|  |  |  | 77.92 | 28.08 | 27.45 |
|  |  |  | 78.49 | 28.11 | 27.47 |
|  |  |  | 79.06 | 28.13 | 27.49 |
|  |  |  | 79.62 | 28.16 | 27.51 |
|  |  |  | 80.19 | 28.18 | 27.53 |
|  |  |  | 80.76 | 28.20 | 27.55 |
|  |  |  | 81.32 | 28.23 | 27.57 |
|  |  |  | 81.89 | 28.25 | 27.59 |
|  |  |  | 82.46 | 28.27 | 27.61 |

| | | | | | |
|---|---|---|---|---|---|
| | | | 83.03 | 28.29 | 27.63 |
| | | | 83.59 | 28.31 | 27.64 |
| | | | 84.16 | 28.33 | 27.66 |
| | | | 84.73 | 28.35 | 27.68 |
| | | | 85.29 | 28.37 | 27.69 |
| | | | 85.86 | 28.38 | 27.70 |
| | | | 86.43 | 28.40 | 27.72 |
| | | | 87.00 | 28.42 | 27.73 |
| | | | 87.56 | 28.43 | 27.74 |
| | | | 88.13 | 28.45 | 27.76 |
| | | | 88.70 | 28.46 | 27.77 |
| | | | 89.26 | 28.48 | 27.78 |
| | | | 89.83 | 28.49 | 27.79 |
| | | | 90.40 | 28.50 | 27.80 |
| | | | 90.97 | 28.52 | 27.81 |
| | | | 91.53 | 28.53 | 27.82 |
| | | | 92.10 | 28.54 | 27.83 |
| | | | 92.67 | 28.55 | 27.84 |
| | | | 93.23 | 28.56 | 27.84 |
| | | | 93.80 | 28.57 | 27.85 |
| | | | 94.37 | 28.58 | 27.86 |
| | | | 94.94 | 28.59 | 27.86 |
| | | | 95.50 | 28.60 | 27.87 |
| | | | 96.07 | 28.61 | 27.88 |
| | | | 96.64 | 28.62 | 27.88 |
| | | | 97.20 | 28.62 | 27.89 |
| | | | 97.77 | 28.63 | 27.89 |
| | | | 98.34 | 28.64 | 27.89 |
| | | | 98.91 | 28.64 | 27.90 |
| | | | 99.47 | 28.65 | 27.90 |
| | | | 100.04 | 28.66 | 27.90 |
| | | | 100.61 | 28.66 | 27.91 |
| | | | 101.17 | 28.67 | 27.91 |
| | | | 101.74 | 28.67 | 27.91 |

| | | | 102.31 | 28.67 | 27.91 |
|---|---|---|---|---|---|
| | | | 102.88 | 28.68 | 27.91 |
| | | | 103.44 | 28.68 | 27.91 |
| | | | 104.01 | 28.69 | 27.91 |
| | | | 104.58 | 28.69 | 27.92 |
| | | | 105.14 | 28.69 | 27.92 |
| | | | 105.71 | 28.69 | 27.92 |

**EP 2 553 127 B1**

**IN DER BESCHREIBUNG AUFGEFÜHRTE DOKUMENTE**

**In der Beschreibung aufgeführte Patentdokumente**

- WO 0028096 A1
- DE 10126100 A1
- WO 0028097 A1
- EP 1506816 A1

**In der Beschreibung aufgeführte Nicht-Patentliteratur**

- *Design of a Supersonic Nozzle,* 01. Januar 1967